# EUROPEAN PATENT SPECIFICATION

(11) **EP 3 496 184 B1**
(45) Date of publication and mention of the grant of the patent: **21.06.2023**
(21) Application number: 18793160.5
(22) Date of filing: 11.05.2018
(51) Int. Cl.: H01M 50/414, H01M 10/0525, B82Y 30/00, H01M 50/434, H01M 50/457, H01M 50/491, H01M 50/497, H01M 50/44, H01M 50/403, H01M 50/443

(54) **MULTI-CORE/SINGLE-SHELL STRUCTURE GEL POLYMER-COATED DIAPHRAGM, AND MANUFACTURING METHOD AND USE THEREOF**
GEL-POLYMER-BESCHICHTETE MEMBRAN MIT MEHRADRIGER/EINZELHÜLLENSTRUKTUR SOWIE HERSTELLUNGSVERFAHREN UND VERWENDUNG DAVON
DIAPHRAGME REVÊTU D'UN GEL POLYMÈRE À STRUCTURE MULTI-NOYAU/MONOCOQUE, ET SON PROCÉDÉ DE FABRICATION ET SON UTILISATION

(30) Priority: 13.06.2017 CN 201710445470
(43) Date of publication of application: 12.06.2019
(73) Proprietor: Shenzhen Senior Technology Material Co., Ltd., Shenzhen, Guangdong 518106 (CN); Senior Material (Europe) AB, 633 62 Eskilstuna (SE)
(72) Inventor: LIAO, Liuhui, Shenzhen Guangdong 518106 (CN); CAO, Jiang, Shenzhen Guangdong 518106 (CN); YANG, Xuemei, Shenzhen Guangdong 518106 (CN); TAN, Bin, Shenzhen Guangdong 518106 (CN); CHEN, Liang, Shenzhen Guangdong 518106 (CN)
(74) Representative: Adamson Jones
(86) International application number: PCT/CN2018/086432
(87) International publication number: WO 2018/228099

(56) References cited:
- EP-A1- 1 826 842
- WO-A1-2016/165559
- CN-A- 105 602 309
- CN-A- 106 519 872
- CN-A- 107 230 766
- JP-A- 2006 182 925
- US-A1- 2014 186 679
- ZHANG YU ET AL: "Tunable wettability of monodisperse core-shell nano-SiO2modified with poly(methylhydrosiloxane) and allyl-poly(ethylene glycol)", COLLOIDS AND SURFACES A: PHYSIOCHEMICAL AND ENGINEERING ASPECTS, ELSEVIER, AMSTERDAM, NL, vol. 441, 6 September 2013 (2013-09-06), pages 16-24, XP028793746, ISSN: 0927-7757, DOI: 10.1016/J.COLSURFA.2013.08.079

## Description

### Technical Field

The present disclosure relates to the field of lithium-ion batteries, and relates to a multicore-monoshell structured gel polymer-coated separator, a method of preparing the same, and use thereof.

### Background Art

Lithium-ion batteries have attracted more and more attention due to their characteristics such as large energy density, high operating voltage, long cycle life, and low self-discharge rate, and their application range is also gradually extending. In a lithium battery structure, a separator is one of the key inner layer components, which isolates positive and negative electrodes to prevent a short circuit, and also has a basic function of providing porous channels for conducting lithium ions. As the traditional lithium-ion battery separator, a polyolefin separator is used, which can only achieve the basic function of the lithium battery separator and can hardly meet the technical requirements of the new generation lithium-ion battery.

With the development of powered vehicles, energy density has become the biggest challenge for the development of lithium-ion batteries. People expect that the energy density of batteries can reach a new order of magnitude, so that the driving time or driving range per charge of a product no longer becomes a major factor that plagues the product. However, problems such as safety performance, hardness, and battery cycle life of the lithium-ion battery have arisen successively at high energy density. The main existing solution is to coat the surface of the polyolefin separator with a functional coating layer, which is mainly ceramic coating, polymer coating, or the like. The ceramic-coated separator improves the heat-shrinkablity and wettability of the separator to some extent so as to improve the cycle life and safety performance of the lithium-ion battery, but an electrolytic solution in a battery with the ceramic-coated separator is in liquid state, there is an inevitable safety problem caused by leakage of the liquid, and also the hardness of the battery is not improved. The polymer-coated separator has the property of absorbing the electrolytic solution and gelling, but the internal resistance of the battery is too large, thus the performance of the battery is affected, and both the rate capability and the cycle life of the battery are reduced. In addition, there are also separators coated with a composite obtained by blending a polymer with a ceramic powder, but the performance of the batteries is affected due to poor performance of the composite coating interface.

Separators for batteries according to prior art are taught e.g. by US 2014/186679 A1 , EP 1 826 842 A1 , WO 2016/165559 A1, CN 106 519 872 A , CN 105 602 309 A or JP 2006 182925 A.

In view of the above, the present disclosure is particularly proposed.

### Summary

The present invention is defined by the present independent claims 1,9 or 14.

A first object of the present disclosure is to provide a multicore-monoshell structured gel polymer-coated separator, which has high ionic conductivity, high dielectric constant, and excellent battery performance.

A second object of the present disclosure is to provide a method of preparing a multicore-monoshell structured gel polymer in the above-mentioned multicore-monoshell structured gel polymer-coated separator, which method is advantageous to an improvement of the overall performance of a finished coating film such as stability and strength, flame retardancy, surface strength, toughness, etc.

A third object of the present disclosure is to provide a multicore-monoshell structured gel polymer, which is prepared by the above-mentioned method of preparing a multicore-monoshell structured gel polymer, and which is advantageous to an improvement of the performance of a multicore-monoshell structured gel polymer-coated separator.

A fourth object of the present disclosure is to provide a method of preparing the above-mentioned multicore-monoshell structured gel polymer-coated separator, which is simple and practical and produces a finished product with good quality.

A fifth object of the present disclosure is to provide use of the above-mentioned multicore-monoshell structured gel polymer-coated separator. For example, it can be used in a lithium-ion battery, including use in the preparation of a gel-state polymer lithium-ion battery, so that the manufacturing efficiency, safety and consistency of the battery can be improved.

To achieve the above objects, the following technical solutions can be employed in the present disclosure:
The present disclosure proposes a multicore-monoshell structured gel polymer-coated separator, comprising a base membrane and a multicore-monoshell structured gel polymer coating layer on one or both sides thereof, the above-mentioned multicore-monoshell structured gel polymer consisting of the following raw materials: 60-70 parts by weight of highly elastic nanoparticles, 20-30 parts by weight of inorganic nanoparticles, 20-40 parts by weight of polymethyl methacrylate, 70-80 parts by weight of acrylonitrile, 0.8-1 part by weight of dicumyl peroxide, 3-5 parts by weight of allyl polyethylene glycol, 0.4-1 part by weight of methyl triethoxysilane, 2-3 parts by weight of tetrakis hydroxymethyl phosphonium sulfate, 0.6-1 part by weight of 2-mercaptobenzimidazole, 2-3 parts by weight of glyceryl tristearate, 1-2 parts by weight of 2,2-dimethylolpropionic acid, 0.3-1 part by weight of zinc pyrithione, 0.7-1 part by weight of ammonium ethoxylated alkyl sulfate, 3-4 parts by weight of hydroxyethyl cellulose, and 1-2 parts by weight of fatty alcohol polyoxyethylene ether.

Optionally, the above-mentioned multicore-monoshell structured gel polymer consists of the following raw materials: 68-70 parts by weight of the highly elastic nanoparticles, 25-30 parts by weight of the inorganic nanoparticles, 30-40 parts by weight of the polymethyl methacrylate, 72-79 parts by weight of the acrylonitrile, 0.9-1 part by weight of the dicumyl peroxide, 4-5 parts by weight of the allyl polyethylene glycol, 0.6-1 part by weight of the methyl triethoxysilane, 2.5-3 parts by weight of the tetrakis hydroxymethyl phosphonium sulfate, 0.8-1 part by weight of the 2-mercaptobenzimidazole, 2.5-3 parts by weight of the glyceryl tristearate, 1.5-2 parts by weight of the 2,2-dimethylolpropionic acid, 0.6-0.9 parts by weight of the zinc pyrithione, 0.8-0.9 parts by weight of the ammonium ethoxylated alkyl sulfate, 3.5-4 parts by weight of the hydroxyethyl cellulose, and 1.5-2 parts by weight of the fatty alcohol polyoxyethylene ether.

Optionally, the above-mentioned multicore-monoshell structured gel polymer consists of the following raw materials: 70 parts by weight of the highly elastic nanoparticles, 30 parts by weight of the inorganic nanoparticles, 40 parts by weight of the polymethyl methacrylate, 72 parts by weight of the acrylonitrile, 0.95 part by weight of the dicumyl peroxide, 4 parts by weight of the allyl polyethylene glycol, 0.8 parts by weight of the methyl triethoxysilane, 2.8 parts by weight of the tetrakis hydroxymethyl phosphonium sulfate, 0.9 parts by weight of the 2-mercaptobenzimidazole, 2.8 parts by weight of the glyceryl tristearate, 1.8 parts by weight of the 2,2-dimethylolpropionic acid, 0.6 parts by weight of the zinc pyrithione, 0.85 parts by weight of the ammonium ethoxylated alkyl sulfate, 3.8 parts by weight of the hydroxyethyl cellulose, and 1.8 parts by weight of the fatty alcohol polyoxyethylene ether.

The above-mentioned highly elastic nanoparticle is any one selected from the group consisting of nitrile-polyvinyl chloride composite elastomer, vulcanized rubber, polyurethane elastomer, nitrile rubber, styrene butadiene rubber, fluoroelastomer, polyester-polyether, cis-polybutadiene rubber, and siloxane, or consists of at least two thereof. Optionally, the inorganic nanoparticle is any one selected from the group consisting of nano-silica, nano-alumina, nano-barium titanate, nano-titania, nano-barium sulfate, nano-montmorillonite, nano-calcium carbonate, and nano-zirconia, or consists of at least two thereof. Optionally, the base membrane is any one selected from the group consisting of a polypropylene porous thin film, a polyethylene porous thin film, a polypropylene-polyethylene-polypropylene three-layered composite porous thin film, a single-sided ceramic coated separator, a double-sided ceramic coated separator, and a nonwoven separator, or consists of at least two thereof.

Optionally, the above-mentioned base membrane has a thickness of 5-50 µm; preferably, the base membrane has a thickness of 15-40 µm; and more preferably, the base membrane has a thickness of 25-30 µm. Optionally, the base membrane has a porosity of 20%-70%; preferably, the base membrane has a porosity of 30%-60%; and more preferably, the base membrane has a porosity of 40-50%. Optionally, the base membrane has an average pore size of 10-1000 nm; preferably, the base membrane has an average pore size of 100-800 nm; and more preferably, the base membrane has an average pore size of 400-500 nm.

The present disclosure also proposes a method of preparing the multicore-monoshell structured gel polymer in the multicore-monoshell structured gel polymer-coated separator described above, comprising the following steps:
mixing 2,2-dimethylolpropionic acid with inorganic nanoparticles to obtain carboxyl nanoparticles; mixing tetrakis hydroxymethyl phosphonium sulfate, hydroxyethyl cellulose, and ammonium ethoxylated alkyl sulfate to obtain a fiber dispersion; mixing 2-mercaptobenzimidazole, the fiber dispersion, and zinc pyrithione to obtain an esterified dispersion; mixing allyl polyethylene glycol, methyl triethoxysilane, and the carboxyl nanoparticles to obtain a silanol dispersion; mixing acrylonitrile, the silanol dispersion, dicumyl peroxide, and the esterified dispersion to obtain a silane polymer solution; mixing the silane polymer solution, highly elastic nanoparticles, polymethyl methacrylate, glyceryl tristearate, and fatty alcohol polyoxyethylene ether to obtain a multicore-monoshell structured gel polymer.

Optionally, 2,2-dimethylolpropionic acid is taken, added to deionized water and stirred uniformly, and inorganic nanoparticles are added, stirred while maintaining the temperature, filtered, and dried at room temperature to obtain carboxyl nanoparticles. Optionally, in the process of preparation of the carboxyl nanoparticles, a weight ratio of 2,2-dimethylolpropionic acid to deionized water is (1:20) to (1:30). Optionally, in the process of preparation of the carboxyl nanoparticles, the stirring while maintaining the temperature is carried out at a temperature of 65 to 70 °C. Optionally, in the process of preparation of the carboxyl nanoparticles, the stirring while maintaining the temperature is carried out for a period of time of 40 to 50 minutes.

Optionally, tetrakis hydroxymethyl phosphonium sulfate is taken, added to deionized water and stirred uniformly, hydroxyethyl cellulose is added and stirred while maintaining the temperature after the temperature is raised, and ammonium ethoxylated alkyl sulfate is added and stirred to room temperature to obtain a fiber dispersion. Optionally, in the process of preparation of the fiber dispersion, a weight ratio of tetrakis hydroxymethyl phosphonium sulfate to deionized water is (1:41) to (1:50). Optionally, in the process of preparation of the fiber dispersion, the temperature after the temperature is raised is 80 to 85 °C. Optionally, in the process of preparation of the fiber dispersion, the stirring while maintaining the temperature is carried out for a period of time of 10 to 22 minutes.

Optionally, 2-mercaptobenzimidazole is taken, added to anhydrous ethanol, stirred uniformly, mixed with the fiber dispersion, delivered into a reaction vessel, stirred while maintaining the temperature, discharged, mixed with zinc pyrithione and stirred to room temperature to obtain an esterified dispersion. Optionally, in the process of preparation of the esterified dispersion, a weight ratio of 2-mercaptobenzimidazole to anhydrous ethanol is (1:5) to (1:8). Optionally, in the process of preparation of the esterified dispersion, the stirring while maintaining the temperature is carried out at a temperature of 90 to 95 °C. Optionally, in the process of preparation of the esterified dispersion, the stirring while maintaining the temperature is carried out for a period of time of 1 to 2 hours.

Optionally, allyl polyethylene glycol is taken, added to methyl triethoxysilane, stirred while maintaining the temperature, mixed with the carboxyl nanoparticles, and stirred uniformly to obtain a silanol dispersion. Optionally, in the process of preparation of the silanol dispersion, allyl polyethylene glycol is maintained at a temperature of 60 to 80 °C for 16 to 20 minutes prior to the addition of methyl triethoxysilane. Optionally, in the process of preparation of the silanol dispersion, the stirring while maintaining the temperature is carried out for a period of time of 4 to 10 minutes. Optionally, in the process of preparation of the silanol dispersion, a sonicating step is further included after mixing with the carboxyl nanoparticles and stirring uniformly; and optionally, the sonication is carried out for a period of time of 10 to 15 minutes.

Optionally, acrylonitrile is taken, added to the silanol dispersion and stirred uniformly, dicumyl peroxide is added and delivered into a reaction vessel, into which nitrogen gas is introduced, and the mixture is stirred while maintaining the temperature, discharged, mixed with the esterified dispersion, and stirred to room temperature to obtain a silane polymer solution. Optionally, in the process of preparation of the silane polymer solution, the stirring while maintaining the temperature is carried out at a temperature of 75 to 80 °C. Optionally, in the process of preparation of the silane polymer solution, the stirring while maintaining the temperature is carried out for a period of time of 1 to 2 hours.

Optionally, the silane polymer solution is taken, mixed with highly elastic nanoparticles, polymethyl methacrylate, glyceryl tristearate, and fatty alcohol polyoxyethylene ether, and stirred to obtain a multicore-monoshell structured gel polymer. Optionally, in the process of preparation of the multicore-monoshell structured gel polymer, the stirring speed is 300 to 400 rpm. Optionally, in the process of preparation of the multicore-monoshell structured gel polymer, the stirring is carried out for a period of time of 20 to 30 minutes.

The present disclosure also proposes a multicore-monoshell structured gel polymer, which is prepared from a method of preparing the multicore-monoshell structured gel polymer described above.

The present disclosure also proposes a method of preparing a multicore-monoshell structured gel polymer-coated separator described above, comprising the following steps: coating a multicore-monoshell structured gel polymer onto one or both sides of a base membrane, and then drying the same; optionally, the drying being carried out by hot air drying.

Optionally, the coating speed is 0.5 to 40 m/min; preferably, the coating speed is 10 to 30 m/min; and more preferably, the coating speed is 15 to 25 m/min. Optionally, the hot air drying is carried out at a temperature of 30 to 80 °C; preferably, the hot air drying is carried out at a temperature of 40 to 70 °C; and more preferably, the hot air drying is carried out at a temperature of 50 to 60°C. Optionally, the coating thickness is between 0.5 and 5 µm; preferably, the coating thickness is between 1 and 4 µm; and more preferably, the coating thickness is between 2 and 3 µm. The present disclosure also proposes an application of the multicore-monoshell structured gel polymer-coated separator described above, which is used in a lithium battery, including its use in the preparation of a gel-state polymer lithium-ion battery. Since the multicore-monoshell structured gel polymer-coated separator has the advantages of both a ceramic separator and a polymer separator, it ensures a resistance to high temperature while maintaining a tight adhesion with an electrode sheet, greatly reducing the internal resistance and the interface impedance of a cell, and improving the safety performance of the battery.

The present disclosure includes the following beneficial effects: The multicore-monoshell structured gel polymer-coated separator provided in the present disclosure has the function of efficiently absorbing an electrolytic solution and gelling, and the multicore-monoshell structured gel polymer-coated separator has excellent battery performance including cycle performance and rate capability, compared with an aqueous PVDF- or aqueous acrylate polymer-coated separator. The multicore-monoshell structured gel polymer-coated separator is used in a lithium-ion battery to develop a gel-state polymer lithium-ion battery, so that the manufacturing efficiency, safety, and consistency of the battery can be improved.

In the preparation process, the inorganic nanoparticles are subjected to carboxylation treatment and then dispersed in a silanol solution, which can effectively improve the compatibility between the inorganic nano-filler and the polymer to improve the stability and strength of the finished coating film.

Esterified fibers are obtained by mixing an alcohol dispersion of 2-mercaptobenzimidazole with acidic fibers, which can effectively improve the flame retardancy, surface strength, and toughness of the coating film so as to improve the overall performance of the coating film.

Using acrylonitrile as a monomer and mixing the obtained silane polymer solution with various inorganic fillers can effectively improve the dispersibility of the fillers among the polymers, effectively reduce agglomeration, and increase the stability and strength of the coating film.

Since the multicore-monoshell structured gel polymer-coated separator has a special multicore-monoshell structure, in a state where the coating layer absorbs an electrolytic solution to swell and gel, microphase separation occurs between the inorganic nanoparticles dispersed in the core layer and the gel polymer, a large number of inorganic-organic interface voids will be generated after the separation, and such voids will form channels that facilitate rapid ion conduction, i.e., fast ion channels. At the same time, after the coating layer absorbs the electrolytic solution to gel, the dispersed nanoparticles inside the core-shell structure are in a metastable state. The particles will be dissociated from the inside of the polymer gel and enriched onto the surface of the coating layer. During the process of charging of the battery, the highly elastic nanoparticles are deformed by the squeezing effect caused by the expansion of the negative electrode, and during the discharge process, the electrode layer shrinks, and the highly elastic nanoparticles are recovered from deformation. Therefore, during the charging and discharging processes, there is always an interaction force between the separator and the electrode, so that the separator and the electrode sheet can be kept in tight contact with each other, which effectively avoids contact voids caused by the expansion/shrinkage of the electrode material, and can effectively suppress a change in thickness of the battery; and the inorganic nanoparticles with a high dielectric constant can effectively reduce the energy barrier during the transmission of lithium ions from the electrode to the electrolyte, and achieve the effect of reducing the interface resistance of the lithium battery and improving the rate capability of the battery. At the same time, the entire system of the coating layer increases the wettability of the separator and the amount of liquid absorbed by the separator, thereby effectively improving the cycle performance of the battery.

### Brief Description of Drawings

For illustrating technical solutions of examples of the present disclosure more clearly, drawings required for use in the examples will be introduced briefly below. It is to be understood that the drawings below are merely illustrative of some examples of the present disclosure, and therefore should not to be considered as limiting the scope of the disclosure. It would be understood by those of ordinary skill in the art that other relevant drawings could also be obtained from these drawings without any inventive effort.
FIG. 1 is a scanning electron micrograph of a multicore-monoshell structured gel polymer-coated separator provided in the present disclosure;
FIG. 2 is a diagram of the principle of action of a multicore-monoshell structured gel polymer-coated separator provided in the present disclosure;
FIG. 3 shows an electrochemical window of a multicore-monoshell structured gel polymer-coated separator provided in the present disclosure;
FIG. 4 shows cycle performance of lithium batteries assembled from a multicore-monoshell structured gel polymer-coated separator, an aqueous PVDF-coated separator, and a base membrane in a test example of the present disclosure;
FIG. 5 shows rate capabilities of lithium batteries assembled from a multicore-monoshell structured gel polymer-coated separator, an aqueous PVDF-coated separator, and a base membrane in a test example of the present disclosure; and
FIG. 6 shows discharge curves (at 1000th cycle) of lithium batteries assembled from a multicore-monoshell structured gel polymer-coated separator, an aqueous PVDF-coated separator, and a base membrane in a test example of the present disclosure.

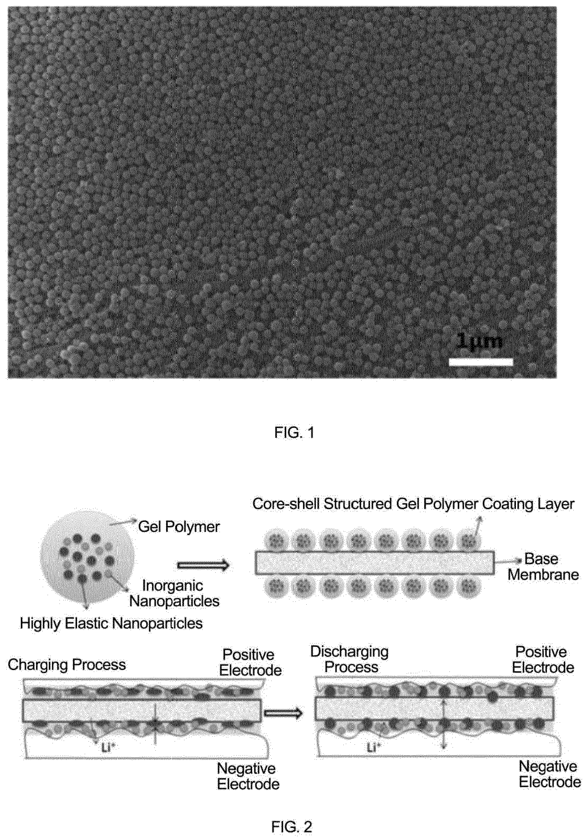

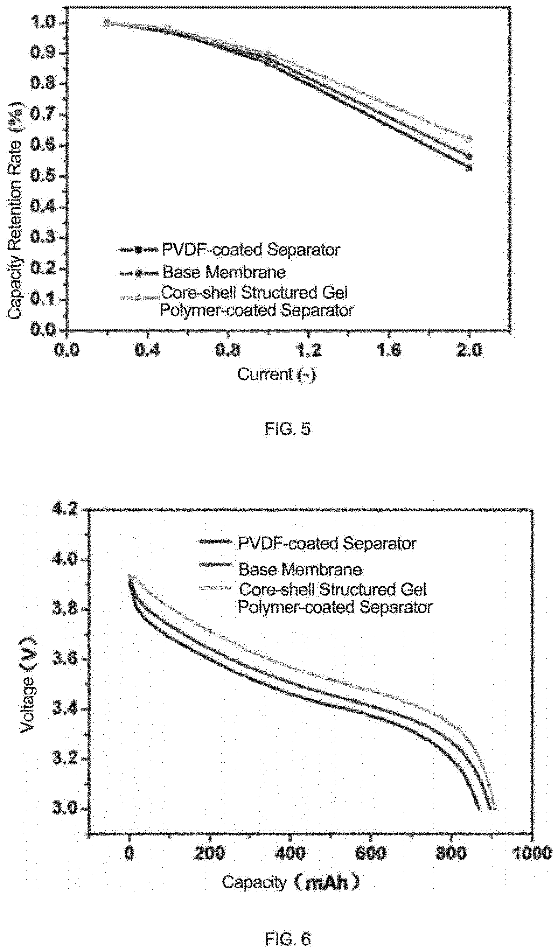

Note: The term "core-shell structure" in each of FIGS. 2 to 6 refers to a "multicore-monoshell structure".

### Detailed Description of examples

In order to make the objects, technical solutions and advantages of the examples of the present disclosure more clear, the technical solutions of the examples of the present disclosure will be described below clearly and completely. Examples are carried out in accordance with conventional conditions or conditions recommended by the manufacturer if no specific conditions are specified in the examples. Reagents or instruments used, whose manufacturers are not specified, are all conventional products that are available commercially.

A multicore-monoshell structured gel polymer-coated separator, a method of preparing the same, and use thereof according to the examples of the present disclosure will be specifically described below.

The multicore-monoshell structured gel polymer-coated separator in the examples of the present disclosure mainly comprises a base membrane and a multicore-monoshell structured gel polymer coating layer on one or both sides thereof. The multicore-monoshell structured gel polymer coating layer is located on one or both sides of the base membrane. Wherein, the multicore-monoshell structured gel polymer coating layer has the advantages of both a ceramic separator and a polymer separator, and ensures a resistance to high temperature while maintaining a tight adhesion with an electrode sheet, greatly reducing the internal resistance and the interface impedance of a cell, and improving the safety performance of the battery. A multicore-monoshell structured gel polymer-coated separator with the multicore-monoshell structured gel polymer coating layer has the function of efficiently absorbing an electrolytic solution and gelling, and the multicore-monoshell structured gel polymer-coated separator has excellent battery performance including cycle performance and rate capability, compared with an aqueous PVDF- or aqueous acrylate polymer-coated separator.

The multicore-monoshell structured gel polymer coating layer described above may mainly consist of the following raw materials: highly elastic nanoparticles, inorganic nanoparticles, polymethyl methacrylate, acrylonitrile, dicumyl peroxide, allyl polyethylene glycol, methyl triethoxysilane, tetrakis hydroxymethyl phosphonium sulfate, 2-mercaptobenzimidazole, glyceryl tristearate, 2,2-dimethylolpropionic acid, zinc pyrithione, ammonium ethoxylated alkyl sulfate, hydroxyethyl cellulose, and fatty alcohol polyoxyethylene ether.

Optionally, the proportions of the above-mentioned raw materials may be, for example, 60-70 parts by weight, 20-30 parts by weight, 20-40 parts by weight, 70-80 parts by weight, 0.8-1 part by weight, 3-5 parts by weight, 0.4-1 part by weight, 2-3 parts by weight, 0.6-1 part by weight, 2-3 parts by weight, 1-2 parts by weight, 0.3-1 part by weight, 0.7-1 part by weight, 3-4 parts by weight, and 1-2 parts by weight, respectively.

Preferably, the proportions of the above-mentioned raw materials may be, for example, 68-70 parts by weight, 25-30 parts by weight, 30-40 parts by weight, 72-79 parts by weight, 0.9-1 part by weight, 4-5 parts by weight, 0.6-1 part by weight, 2.5-3 parts by weight, 0.8-1 part by weight, 2.5-3 parts by weight, 1.5-2 parts by weight, 0.6-0.9 parts by weight, 0.8-0.9 parts by weight, 3.5-4 parts by weight, and 1.5-2 parts by weight, respectively.

More preferably, the proportions of the above-mentioned raw materials may be, for example, 70 parts by weight, 30 parts by weight, 40 parts by weight, 72 parts by weight, 0.95 parts by weight, 4 parts by weight, 0.8 parts by weight, 2.8 parts by weight, 0.9 parts by weight, 2.8 parts by weight, 1.8 parts by weight, 0.6 parts by weight, 0.85 parts by weight, 3.8 parts by weight, and 1.8 parts by weight, respectively.

Optionally, the above-mentioned highly elastic nanoparticle may be any one selected from the group consisting of nitrile-polyvinyl chloride composite elastomer, vulcanized rubber, polyurethane elastomer, nitrile rubber, styrene butadiene rubber, fluoroelastomer, polyester-polyether, cis-polybutadiene rubber, and siloxane, or may also consist of at least two thereof.

Optionally, the above-mentioned inorganic nanoparticles may be any one selected from the group consisting of nano-silica, nano-alumina, nano-barium titanate, nano-titania, nano-barium sulfate, nano-montmorillonite, nano-calcium carbonate, and nano-zirconia, or may also consist of at least two thereof.

Optionally, the base membrane may be any one selected from the group consisting of a polypropylene porous thin film, a polyethylene porous thin film, a polypropylene-polyethylene-polypropylene three-layered composite porous thin film, a single-sided ceramic coated separator, a double-sided ceramic coated separator, and a nonwoven separator, or may consist of at least two thereof.

Optionally, the base membrane in the examples of the present disclosure may have a thickness of 5-50 µm, and the base membrane is within this thickness range. Preferably, its thickness is 15-40 µm; and more preferably, its thickness is 25-30 µm. Optionally, the base membrane in the examples of the present disclosure has a porosity of 20%-70%. Preferably, its porosity is 30%-60%; and more preferably, its porosity is 40-50%. Optionally, the base membrane in the examples of the present disclosure has an average pore size of 10-1000 nm. Preferably, its average pore size is 100-800 nm; and more preferably, its average pore size is 400-500 nm.

In addition, an example of the present disclosure also provides a method of preparing a multicore-monoshell structured gel polymer in the multicore-monoshell structured gel polymer-coated separator described above. It can be prepared with reference to the following steps:
mixing 2,2-dimethylolpropionic acid with inorganic nanoparticles to obtain carboxyl nanoparticles; mixing tetrakis hydroxymethyl phosphonium sulfate, hydroxyethyl cellulose, and ammonium ethoxylated alkyl sulfate to obtain a fiber dispersion; mixing 2-mercaptobenzimidazole, the above-mentioned fiber dispersion, and zinc pyrithione to obtain an esterified dispersion; mixing allyl polyethylene glycol, methyl triethoxysilane, and the above-mentioned carboxyl nanoparticles to obtain a silanol dispersion; mixing acrylonitrile, the above-mentioned silanol dispersion, dicumyl peroxide, and the above-mentioned esterified dispersion to obtain a silane polymer solution; mixing the above-mentioned silane polymer solution, highly elastic nanoparticles, polymethyl methacrylate, glyceryl tristearate, and fatty alcohol polyoxyethylene ether to obtain a multicore-monoshell structured gel polymer.

Further, for example, it can be prepared with reference to the following manner: (1) 2,2-dimethylolpropionic acid and inorganic nanoparticles are mixed with water at a ratio, filtered, and dried to obtain carboxyl nanoparticles. Preferably, 2,2-dimethylolpropionic acid is firstly added to deionized water and stirred uniformly, and then inorganic nanoparticles are added, stirred while maintaining the temperature, filtered, and dried at room temperature to obtain carboxyl nanoparticles.

Inorganic nanoparticles are subjected to carboxylation treatment and then dispersed in a silanol solution, which can effectively improve the compatibility between the inorganic nanofillers and the polymer to improve the stability and strength of the finished coating film.

Optionally, a weight ratio of 2,2-dimethylolpropionic acid to deionized water in the above step may be (1:20) to (1:30). Optionally, the stirring while maintaining the temperature in the above step may be carried out at a temperature of 65 to 70 °C. Optionally, the stirring while maintaining the temperature in the above step may be carried out for a period of time of 40 to 50 minutes.

(2) Tetrakis hydroxymethyl phosphonium sulfate, hydroxyethyl cellulose, and ammonium ethoxylated alkyl sulfate are mixed with water at a ratio to obtain a fiber dispersion. Preferably, tetrakis hydroxymethyl phosphonium sulfate may be firstly added to deionized water and stirred uniformly, then hydroxyethyl cellulose is added and stirred while maintaining the temperature after the temperature is raised, and then ammonium ethoxylated alkyl sulfate is added and stirred to room temperature to obtain a fiber dispersion.

Optionally, a weight ratio of tetrakis hydroxymethyl phosphonium sulfate to deionized water in step (2) may be (1:41) to (1:50). Optionally, in step (2), the temperature after the temperature is raised may be 80 to 85 °C. Optionally, in step (2), the stirring while maintaining the temperature may be carried out for a period of time of 10 to 22 minutes.

(3) 2-mercaptobenzimidazole, the fiber dispersion obtained in step (2), and zinc pyrithione are mixed with anhydrous ethanol at a ratio to obtain an esterified dispersion. Preferably, 2-mercaptobenzimidazole may be firstly added to anhydrous ethanol, stirred uniformly, and then mixed with the fiber dispersion in step (2), delivered into a reaction vessel, stirred while maintaining the temperature, discharged, and then mixed with zinc pyrithione and stirred to room temperature to obtain an esterified dispersion.

Esterified fibers are obtained by mixing an alcohol dispersion of 2-mercaptobenzimidazole with acidic fibers, which can effectively improve the flame retardancy, surface strength, and toughness of the coating film so as to improve the overall performance of the coating film.

Optionally, in step (3), a weight ratio of 2-mercaptobenzimidazole to anhydrous ethanol may be (1:5) to (1:8). Optionally, in step (3), the stirring while maintaining the temperature may be carried out at a temperature of 90 to 95 °C. Optionally, in step (3), the stirring while maintaining the temperature may be carried out for a period of time of 1 to 2 hours.

(4) Allyl polyethylene glycol and methyl triethoxysilane are mixed with the carboxyl nanoparticles obtained in step (1) at a ratio to obtain a silanol dispersion. Preferably, allyl polyethylene glycol is firstly added to methyl triethoxysilane, stirred while maintaining the temperature, then mixed with the carboxyl nanoparticles obtained in step (1), and stirred uniformly to obtain a silanol dispersion.

Optionally, allyl polyethylene glycol is preferably maintained at a temperature of 60 to 80 °C for 16 to 20 minutes, prior to the addition of methyl triethoxysilane in step (4). Optionally, in step (4), the stirring while maintaining the temperature may be carried out for a period of time of 4 to 10 minutes. Optionally, in step (4), a sonicating step is further included after mixing with the carboxyl nanoparticles and stirring, and optionally, the sonication may be carried out for a period of time of 10 to 15 minutes.

(5) Acrylonitrile, the silanol dispersion obtained in step (4), dicumyl peroxide, and the esterified dispersion obtained in step (3) are mixed at a ratio to obtain a silane polymer solution. Preferably, acrylonitrile may be firstly added to the silanol dispersion and stirred uniformly, and then dicumyl peroxide is added and delivered into a reaction vessel, into which nitrogen gas is introduced, and the mixture is stirred while maintaining the temperature, discharged, then mixed with the esterified dispersion, and stirred to room temperature to obtain a silane polymer solution.

Using acrylonitrile as a monomer and mixing the obtained silane polymer solution with various inorganic fillers can effectively improve the dispersibility of the fillers among the polymers, effectively reduce agglomeration, and increase the stability and strength of the coating film.

Optionally, in step (5), the stirring while maintaining the temperature may be carried out at a temperature of 75 to 80 °C. Optionally, in step (5), the stirring while maintaining the temperature may be carried out for a period of time of 1 to 2 hours.

(6) The silane polymer solution obtained in step (5) is mixed with highly elastic nanoparticles, polymethyl methacrylate, glyceryl tristearate, and fatty alcohol polyoxyethylene ether, and stirred to obtain a multicore-monoshell structured gel polymer. Optionally, the stirring speed in step (6) may be 300 to 400 rpm, and optionally, the stirring in step (6) may be carried out for a period of time of 20 to 30 minutes.

As described above, in the examples of the present disclosure, inorganic nanoparticles are subjected to carboxylation treatment and then dispersed in a silanol solution, which can effectively improve the compatibility between the inorganic nano-filler and the polymer to improve the stability and strength of the finished coating film. Esterified fibers are obtained by mixing an alcohol dispersion of 2-mercaptobenzimidazole with acidic fibers, which can effectively improve the flame retardancy, surface strength, and toughness of the coating film so as to improve the overall performance of the coating film. Using acrylonitrile as a monomer and mixing the obtained silane polymer solution with various inorganic fillers can effectively improve the dispersibility of the fillers among the polymers, effectively reduce agglomeration, and increase the stability and strength of the coating film.

In addition, an example of the present disclosure also provides a method of preparing a multicore-monoshell structured gel polymer-coated separator, which may comprise the following steps: coating the multicore-monoshell structured gel polymer onto one or both sides of a base membrane, and then drying the same.

Optionally, the coating may be carried out by using a coater, and the drying may be carried out by hot air drying. Optionally, the coating speed may be 0.5 to 40 m/min; preferably, the coating speed is 10 to 30 m/min; and more preferably, the coating speed is 15 to 25 m/min. Optionally, the hot air drying is carried out at a temperature of 30 to 80 °C; preferably, the hot air drying is carried out at a temperature of 40 to 70 °C; and more preferably, the hot air drying is carried out at a temperature of 50 to 60°C. Optionally, the coating thickness is between 0.5 and 5 µm; preferably, the coating thickness is between 1 and 4 µm; and more preferably, the coating thickness is between 2 and 3 µm.

In addition, an example of the present disclosure also provides an application of a multicore-monoshell structured gel polymer-coated separator. For example, it can be used in a lithium-ion battery, including use in the preparation of a gel-state polymer lithium-ion battery, so that the manufacturing efficiency, safety and consistency of the battery can be improved.

The principle thereof is that due to the special structure of the multicore-monoshell structured gel polymer-coated separator, in a state where the coating layer absorbs an electrolytic solution to swell and gel, microphase separation occurs between the inorganic nanoparticles dispersed in the core layer and the gel polymer, a large number of inorganic-organic interface voids will be generated after the separation, and such voids will form channels that facilitate rapid ion conduction, i.e., fast ion channels. At the same time, after the coating layer absorbs the electrolytic solution to gel, the dispersed nanoparticles inside the core-shell structure are in a metastable state. The particles will be dissociated from the inside of the polymer gel and enriched onto the surface of the coating layer. During the process of charging of the battery, the highly elastic nanoparticles are deformed by the squeezing effect caused by the expansion of the negative electrode, and during the discharge process, the electrode layer shrinks, and the highly elastic nanoparticles are recovered from deformation. Therefore, during the charging and discharging processes, there is always an interaction force between the separator and the electrode, so that the separator and the electrode sheet can be kept in tight contact with each other, which effectively avoids contact voids caused by the expansion/shrinkage of the electrode material, and can effectively suppress a change in thickness of the battery; and the inorganic nanoparticles with a high dielectric constant can effectively reduce the energy barrier during the transmission of lithium ions from the electrode to the electrolyte, and achieve the effect of reducing the interface resistance of the lithium battery and improving the rate capability of the battery. At the same time, the entire system of the coating layer increases the wettability of the separator and the amount of liquid absorbed by the separator, thereby effectively improving the cycle performance of the battery.

### Example 1

(1) 1 part by weight of 2,2-dimethylolpropionic acid was taken, added to deionized water of 20 times its weight, and stirred uniformly, and 30 parts by weight of inorganic nanoparticles were added, stirred for 40 minutes while maintaining the temperature at 65 °C, filtered, and dried at room temperature to obtain carboxyl nanoparticles.
(2) 2 parts by weight of tetrakis hydroxymethyl phosphonium sulfate were taken, added to deionized water of 50 times its weight, and stirred uniformly, 3 parts by weight of hydroxyethyl cellulose were added, after the temperature was raised to 85 °C, the mixture was stirred for 22 minutes while maintaining the temperature, and 0.7 parts by weight of ammonium ethoxylated alkyl sulfate were added and stirred to room temperature to obtain a fiber dispersion.
(3) 0.6 parts by weight of 2-mercaptobenzimidazole were taken, added to anhydrous ethanol of 8 times its weight, stirred uniformly, mixed with the above-mentioned fiber dispersion, delivered into a reaction vessel, stirred for 2 hours while maintaining the temperature at 95 °C, discharged, mixed with 0.3 parts by weight of zinc pyrithione, and stirred to room temperature to obtain an esterified dispersion.
(4) 3 parts by weight of allyl polyethylene glycol were taken and maintained at a temperature of 70 °C for 20 minutes, to which 0.4 parts by weight of methyl triethoxysilane were added, continued to be stirred for 10 minutes while maintaining the temperature, mixed with the above-mentioned carboxyl nanoparticles, stirred uniformly, and sonicated for 10 minutes to obtain a silanol dispersion.
(5) 70 parts by weight of acrylonitrile were taken, added to the above-mentioned silanol dispersion, and stirred uniformly, to which 0.8 parts by weight of dicumyl peroxide were added and delivered into a reaction vessel, into which nitrogen gas was introduced, and the mixture was stirred for 2 hours while maintaining the temperature at 80 °C, discharged, mixed with the above-mentioned esterified dispersion, and stirred to room temperature to obtain a silane polymer solution.
(6) The above-mentioned silane polymer solution was taken and mixed with 70 parts by weight of highly elastic nanoparticles, 40 parts by weight of polymethyl methacrylate, 2 parts by weight of glyceryl tristearate, and 1 part by weight of fatty alcohol polyoxyethylene ether and stirred at 400 rpm for 30 minutes to obtain a multicore-monoshell structured gel polymer.

Wherein, the highly elastic nanoparticle is nitrile-polyvinyl chloride composite elastomer; the inorganic nanoparticle is nano-silica; and the base membrane is a polypropylene porous thin film, and has a thickness of 5 µm, a porosity of 20%, and an average pore size of 10 nm.

The above-mentioned multicore-monoshell structured gel polymer was coated to one side of the base membrane by using a coater at a coating speed of 40 m/min and a coating thickness of 0.5 µm, and then dried by hot air at a temperature of 80 °C, whereby a multicore-monoshell gel polymer coated separator comprising a base membrane and a multicore-monoshell gel structured polymer coating layer on one side thereof is obtained.

### Example 2

(1) 1 part by weight of 2,2-dimethylolpropionic acid was taken, added to deionized water of 30 times its weight, and stirred uniformly, and 30 parts by weight of inorganic nanoparticles were added, stirred for 50 minutes while maintaining the temperature at 70 °C, filtered, and dried at room temperature to obtain carboxyl nanoparticles.
(2) 2 parts by weight of tetrakis hydroxymethyl phosphonium sulfate were taken, added to deionized water of 50 times its weight, and stirred uniformly, 3 parts by weight of hydroxyethyl cellulose were added, after the temperature was raised to 85 °C, the mixture was stirred for 22 minutes while maintaining the temperature, and 0.7 parts by weight of ammonium ethoxylated alkyl sulfate were added and stirred to room temperature to obtain a fiber dispersion.
(3) 0.6 parts by weight of 2-mercaptobenzimidazole were taken, added to anhydrous ethanol of 8 times its weight, stirred uniformly, mixed with the above-mentioned fiber dispersion, delivered into a reaction vessel, stirred for 2 hours while maintaining the temperature at 95 °C, discharged, mixed with 0.3 parts by weight of zinc pyrithione, and stirred to room temperature to obtain an esterified dispersion.
(4) 5 parts by weight of allyl polyethylene glycol were taken and maintained at a temperature of 70 °C for 20 minutes, to which 1 part by weight of methyl triethoxysilane was added, continued to be stirred for 10 minutes while maintaining the temperature, mixed with the above-mentioned carboxyl nanoparticles, stirred uniformly, and sonicated for 10 minutes to obtain a silanol dispersion.
(5) 80 parts by weight of acrylonitrile were taken, added to the above-mentioned silanol dispersion, and stirred uniformly, to which 1 part by weight of dicumyl peroxide was added and delivered into a reaction vessel, into which nitrogen gas was introduced, and the mixture was stirred for 1 hour while maintaining the temperature at 75 °C, discharged, mixed with the above-mentioned esterified dispersion, and stirred to room temperature to obtain a silane polymer solution.
(6) The above-mentioned silane polymer solution was taken and mixed with 70 parts by weight of highly elastic nanoparticles, 40 parts by weight of polymethyl methacrylate, 3 parts by weight of glyceryl tristearate, and 1 part by weight of fatty alcohol polyoxyethylene ether and stirred at 400 rpm for 20 minutes to obtain a multicore-monoshell structured gel polymer.

Wherein, the highly elastic nanoparticle is vulcanized rubber; the inorganic nanoparticle is nano-zirconia; and the base membrane is a polypropylene porous thin film, and has a thickness of 50 µm, a porosity of 70%, and an average pore size of 1000 nm.

The above-mentioned multicore-monoshell structured gel polymer was coated to one side of the base membrane by using a coater at a coating speed of 40 m/min and a coating thickness of 5 µm, and then dried by hot air at a temperature of 80 °C, whereby a multicore-monoshell gel polymer coated separator comprising a base membrane and a multicore-monoshell structured gel polymer coating layer on one side thereof is obtained.

### Example 3

(1) 1 part by weight of 2,2-dimethylolpropionic acid was taken, added to deionized water of 30 times its weight, and stirred uniformly, and 30 parts by weight of inorganic nanoparticles were added, stirred for 50 minutes while maintaining the temperature at 70 °C, filtered, and dried at room temperature to obtain carboxyl nanoparticles.
(2) 2 parts by weight of tetrakis hydroxymethyl phosphonium sulfate were taken, added to deionized water of 50 times its weight, and stirred uniformly, 3 parts by weight of hydroxyethyl cellulose were added, after the temperature was raised to 85 °C, the mixture was stirred for 22 minutes while maintaining the temperature, and 0.7 parts by weight of ammonium ethoxylated alkyl sulfate were added and stirred to room temperature to obtain a fiber dispersion.
(3) 0.6 parts by weight of 2-mercaptobenzimidazole were taken, added to anhydrous ethanol of 5 times its weight, stirred uniformly, mixed with the above-mentioned fiber dispersion, delivered into a reaction vessel, stirred for 1 hour while maintaining the temperature at 90 °C, discharged, mixed with 0.6 parts by weight of zinc pyrithione, and stirred to room temperature to obtain an esterified dispersion.
(4) 4 parts by weight of allyl polyethylene glycol were taken and maintained at a temperature of 70 °C for 20 minutes, to which 0.4 parts by weight of methyl triethoxysilane were added, continued to be stirred for 5 minutes while maintaining the temperature, mixed with the above-mentioned carboxyl nanoparticles, stirred uniformly, and sonicated for 10 minutes to obtain a silanol dispersion.
(5) 72 parts by weight of acrylonitrile were taken, added to the above-mentioned silanol dispersion, and stirred uniformly, to which 0.8 parts by weight of dicumyl peroxide were added and delivered into a reaction vessel, into which nitrogen gas was introduced, and the mixture was stirred for 1 hour while maintaining the temperature at 80 °C, discharged, mixed with the above-mentioned esterified dispersion, and stirred to room temperature to obtain a silane polymer solution.
(6) The above-mentioned silane polymer solution was taken and mixed with 70 parts by weight of highly elastic nanoparticles, 40 parts by weight of polymethyl methacrylate, 2 parts by weight of glyceryl tristearate, and 1 part by weight of fatty alcohol polyoxyethylene ether and stirred at 400 rpm for 30 minutes to obtain a multicore-monoshell structured gel polymer.

Wherein, the highly elastic nanoparticle is styrene butadiene rubber; the inorganic nanoparticle is nano-calcium carbonate; and the base membrane is a polypropylene-polyethylene-polypropylene three-layered composite porous thin film, and has a thickness of 5 µm, a porosity of 20%, and an average pore size of 10 nm.

The above-mentioned multicore-monoshell structured gel polymer was coated to one side of the base membrane by using a coater at a coating speed of 10 m/min and a coating thickness of 0.5 µm, and then dried by hot air at a temperature of 30 °C, whereby a multicore-monoshell gel polymer coated separator comprising a base membrane and a multicore-monoshell gel structured polymer coating layer on one side thereof is obtained.

### Example 4

(1) 1 part by weight of 2,2-dimethylolpropionic acid was taken, added to deionized water of 30 times its weight, and stirred uniformly, and 20 parts by weight of inorganic nanoparticles were added, stirred for 49 minutes while maintaining the temperature at 70 °C, filtered, and dried at room temperature to obtain carboxyl nanoparticles.
(2) 2 parts by weight of tetrakis hydroxymethyl phosphonium sulfate were taken, added to deionized water of 41 times its weight, and stirred uniformly, 3 parts by weight of hydroxyethyl cellulose were added, after the temperature was raised to 80 °C, the mixture was stirred for 19 minutes while maintaining the temperature, and 0.7 parts by weight of ammonium ethoxylated alkyl sulfate were added and stirred to room temperature to obtain a fiber dispersion.
(3) 0.6 parts by weight of 2-mercaptobenzimidazole were taken, added to anhydrous ethanol of 5 times its weight, stirred uniformly, mixed with the above-mentioned fiber dispersion, delivered into a reaction vessel, stirred for 1 hour while maintaining the temperature at 95 °C, discharged, mixed with 0.9 parts by weight of zinc pyrithione, and stirred to room temperature to obtain an esterified dispersion.
(4) 3 parts by weight of allyl polyethylene glycol were taken and maintained at a temperature of 70 °C for 16 minutes, to which 0.4 parts by weight of methyl triethoxysilane were added, continued to be stirred for 7 minutes while maintaining the temperature, mixed with the above-mentioned carboxyl nanoparticles, stirred uniformly, and sonicated for 10 minutes to obtain a silanol dispersion.
(5) 79 parts by weight of acrylonitrile were taken, added to the above-mentioned silanol dispersion, and stirred uniformly, to which 0.8 parts by weight of dicumyl peroxide were added and delivered into a reaction vessel, into which nitrogen gas was introduced, and the mixture was stirred for 1 hour while maintaining the temperature at 75 °C, discharged, mixed with the above-mentioned esterified dispersion, and stirred to room temperature to obtain a silane polymer solution.
(6) The above-mentioned silane polymer solution was taken and mixed with 68 parts by weight of highly elastic nanoparticles, 28 parts by weight of polymethyl methacrylate, 2 parts by weight of glyceryl tristearate, and 1 part by weight of fatty alcohol polyoxyethylene ether and stirred at 400 rpm for 20 minutes to obtain a multicore-monoshell structured gel polymer.

Wherein, the highly elastic nanoparticle is nitrile rubber; the inorganic nanoparticle is nano-alumina; and the base membrane is a polypropylene porous thin film, and has a thickness of 50 µm, a porosity of 70%, and an average pore size of 1000 nm.

The above-mentioned multicore-monoshell structured gel polymer was coated to one side of the base membrane by using a coater at a coating speed of 30 m/min and a coating thickness of 5 µm, and then dried by hot air at a temperature of 50 °C, whereby a multicore-monoshell gel polymer coated separator comprising a base membrane and a multicore-monoshell gel structured polymer coating layer on one side thereof is obtained.

### Example 5

(1) 2 parts by weight of 2,2-dimethylolpropionic acid were taken, added to deionized water of 30 times its weight, and stirred uniformly, and 25 parts by weight of inorganic nanoparticles were added, stirred for 50 minutes while maintaining the temperature at 70 °C, filtered, and dried at room temperature to obtain carboxyl nanoparticles.
(2) 2 parts by weight of tetrakis hydroxymethyl phosphonium sulfate were taken, added to deionized water of 50 times its weight, and stirred uniformly, 3 parts by weight of hydroxyethyl cellulose were added, after the temperature was raised to 85 °C, the mixture was stirred for 22 minutes while maintaining the temperature, and 0.7 parts by weight of ammonium ethoxylated alkyl sulfate were added and stirred to room temperature to obtain a fiber dispersion.
(3) 0.6 parts by weight of 2-mercaptobenzimidazole were taken, added to anhydrous ethanol of 7 times its weight, stirred uniformly, mixed with the above-mentioned fiber dispersion, delivered into a reaction vessel, stirred for 1 hour while maintaining the temperature at 95 °C, discharged, mixed with 0.3 parts by weight of zinc pyrithione, and stirred to room temperature to obtain an esterified dispersion.
(4) 3 parts by weight of allyl polyethylene glycol were taken and maintained at a temperature of 70 °C for 16 minutes, to which 0.6 parts by weight of methyl triethoxysilane were added, continued to be stirred for 5 minutes while maintaining the temperature, mixed with the above-mentioned carboxyl nanoparticles, stirred uniformly, and sonicated for 10 minutes to obtain a silanol dispersion.
(5) 70 parts by weight of acrylonitrile were taken, added to the above-mentioned silanol dispersion, and stirred uniformly, to which 0.8 parts by weight of dicumyl peroxide were added and delivered into a reaction vessel, into which nitrogen gas was introduced, and the mixture was stirred for 1 hour while maintaining the temperature at 80 °C, discharged, mixed with the above-mentioned esterified dispersion, and stirred to room temperature to obtain a silane polymer solution.
(6) The above-mentioned silane polymer solution was taken and mixed with 70 parts by weight of highly elastic nanoparticles, 26 parts by weight of polymethyl methacrylate, 2 parts by weight of glyceryl tristearate, and 2 parts by weight of fatty alcohol polyoxyethylene ether and stirred at 400 rpm for 30 minutes to obtain a multicore-monoshell structured gel polymer.

Wherein, the highly elastic nanoparticle is nitrile-polyvinyl chloride composite elastomer; the inorganic nanoparticle is nano-barium titanate; and the base membrane is a polypropylene porous thin film, and has a thickness of 5 µm, a porosity of 20%, and an average pore size of 10 nm.

The above-mentioned multicore-monoshell structured gel polymer was coated to one side of the base membrane by using a coater at a coating speed of 10 m/min and a coating thickness of 4 µm, and then dried by hot air at a temperature of 80 °C, whereby a multicore-monoshell gel polymer coated separator comprising a base membrane and a multicore-monoshell gel structured polymer coating layer on one side thereof is obtained.

### Example 6

(1) 2 parts by weight of 2,2-dimethylolpropionic acid were taken, added to deionized water of 30 times its weight, and stirred uniformly, and 25 parts by weight of inorganic nanoparticles were added, stirred for 41 minutes while maintaining the temperature at 65 °C, filtered, and dried at room temperature to obtain carboxyl nanoparticles.
(2) 2 parts by weight of tetrakis hydroxymethyl phosphonium sulfate were taken, added to deionized water of 46 times its weight, and stirred uniformly, 3 parts by weight of hydroxyethyl cellulose were added, after the temperature was raised to 80 °C, the mixture was stirred for 16 minutes while maintaining the temperature, and 0.7 parts by weight of ammonium ethoxylated alkyl sulfate were added and stirred to room temperature to obtain a fiber dispersion.
(3) 0.6 parts by weight of 2-mercaptobenzimidazole were taken, added to anhydrous ethanol of 8 times its weight, stirred uniformly, mixed with the above-mentioned fiber dispersion, delivered into a reaction vessel, stirred for 1 hour while maintaining the temperature at 95 °C, discharged, mixed with 0.3 parts by weight of zinc pyrithione, and stirred to room temperature to obtain an esterified dispersion.
(4) 5 parts by weight of allyl polyethylene glycol were taken and maintained at a temperature of 70 °C for 19 minutes, to which 1 part by weight of methyl triethoxysilane was added, continued to be stirred for 5 minutes while maintaining the temperature, mixed with the above-mentioned carboxyl nanoparticles, stirred uniformly, and sonicated for 10 minutes to obtain a silanol dispersion.
(5) 70 parts by weight of acrylonitrile were taken, added to the above-mentioned silanol dispersion, and stirred uniformly, to which 0.8 parts by weight of dicumyl peroxide were added and delivered into a reaction vessel, into which nitrogen gas was introduced, and the mixture was stirred for 2 hours while maintaining the temperature at 80 °C, discharged, mixed with the above-mentioned esterified dispersion, and stirred to room temperature to obtain a silane polymer solution.
(6) The above-mentioned silane polymer solution was taken and mixed with 67 parts by weight of highly elastic nanoparticles, 20 parts by weight of polymethyl methacrylate, 2 parts by weight of glyceryl tristearate, and 1 part by weight of fatty alcohol polyoxyethylene ether and stirred at 400 rpm for 30 minutes to obtain a multicore-monoshell structured gel polymer.

Wherein, the highly elastic nanoparticle is polyester-polyether; the inorganic nanoparticle is nano-silica; and the base membrane is a polypropylene porous thin film, and has a thickness of 50 µm, a porosity of 70%, and an average pore size of 1000 nm.

The above-mentioned multicore-monoshell structured gel polymer was coated to one side of the base membrane by using a coater at a coating speed of 30 m/min and a coating thickness of 4 µm, and then dried by hot air at a temperature of 30 °C, whereby a multicore-monoshell gel polymer coated separator comprising a base membrane and a multicore-monoshell gel structured polymer coating layer on one side thereof is obtained.

### Example 7

(1) 1 part by weight of 2,2-dimethylolpropionic acid was taken, added to deionized water of 30 times its weight, and stirred uniformly, and 23 parts by weight of inorganic nanoparticles were added, stirred for 50 minutes while maintaining the temperature at 70 °C, filtered, and dried at room temperature to obtain carboxyl nanoparticles.
(2) 2 parts by weight of tetrakis hydroxymethyl phosphonium sulfate were taken, added to deionized water of 45 times its weight, and stirred uniformly, 3 parts by weight of hydroxyethyl cellulose were added, the temperature was raised to 85 °C, the mixture was stirred for 16 minutes while maintaining the temperature, and 0.7 parts by weight of ammonium ethoxylated alkyl sulfate were added and stirred to room temperature to obtain a fiber dispersion.
(3) 0.6 parts by weight of 2-mercaptobenzimidazole were taken, added to anhydrous ethanol of 8 times its weight, stirred uniformly, mixed with the above-mentioned fiber dispersion, delivered into a reaction vessel, stirred for 2 hours while maintaining the temperature at 95 °C, discharged, mixed with 0.5 parts by weight of zinc pyrithione, and stirred to room temperature to obtain an esterified dispersion.
(4) 3 parts by weight of allyl polyethylene glycol were taken and maintained at a temperature of 70 °C for 20 minutes, to which 0.4 parts by weight of methyl triethoxysilane were added, continued to be stirred for 8 minutes while maintaining the temperature, mixed with the above-mentioned carboxyl nanoparticles, stirred uniformly, and sonicated for 10 minutes to obtain a silanol dispersion.
(5) 75 parts by weight of acrylonitrile were taken, added to the above-mentioned silanol dispersion, and stirred uniformly, to which 0.8 parts by weight of dicumyl peroxide were added and delivered into a reaction vessel, into which nitrogen gas was introduced, and the mixture was stirred for 1 hour while maintaining the temperature at 70 °C, discharged, mixed with the above-mentioned esterified dispersion, and stirred to room temperature to obtain a silane polymer solution.
(6) The above-mentioned silane polymer solution was taken and mixed with 65 parts by weight of highly elastic nanoparticles, 25 parts by weight of polymethyl methacrylate, 2 parts by weight of glyceryl tristearate, and 1 part by weight of fatty alcohol polyoxyethylene ether and stirred at 300 rpm for 20 minutes to obtain a multicore-monoshell structured gel polymer.

The above-mentioned highly elastic nanoparticle is styrene butadiene rubber; the inorganic nanoparticle is nano-silica; and the base membrane is a polypropylene porous thin film, and has a thickness of 5 µm, a porosity of 20%, and an average pore size of 10 nm.

The above-mentioned multicore-monoshell structured gel polymer was coated to one side of the base membrane by using a coater at a coating speed of 20 m/min and a coating thickness of 4 µm, and then dried by hot air at a temperature of 50 °C, whereby a multicore-monoshell gel polymer coated separator comprising a base membrane and a multicore-monoshell gel structured polymer coating layer on one side thereof is obtained.

### Example 8

(1) 1.5 parts by weight of 2,2-dimethylolpropionic acid were taken, added to deionized water of 25 times its weight, and stirred uniformly, and 60 parts by weight of inorganic nanoparticles were added, stirred for 45 minutes while maintaining the temperature at 67.5 °C, filtered, and dried at room temperature to obtain carboxyl nanoparticles.
(2) 3 parts by weight of tetrakis hydroxymethyl phosphonium sulfate were taken, added to deionized water of 45 times its weight, and stirred uniformly, 4 parts by weight of hydroxyethyl cellulose were added, after the temperature was raised to 82.5 °C, the mixture was stirred for 10 minutes while maintaining the temperature, and 1 part by weight of ammonium ethoxylated alkyl sulfate was added and stirred to room temperature to obtain a fiber dispersion.
(3) 1 part by weight of 2-mercaptobenzimidazole was taken, added to anhydrous ethanol of 6.5 times its weight, stirred uniformly, mixed with the above-mentioned fiber dispersion, delivered into a reaction vessel, stirred for 1.5 hours while maintaining the temperature at 92.5 °C, discharged, mixed with 1 part by weight of zinc pyrithione, and stirred to room temperature to obtain an esterified dispersion.
(4) 4 parts by weight of allyl polyethylene glycol were taken and maintained at a temperature of 60 °C for 18 minutes, to which 0.7 parts by weight of methyl triethoxysilane were added, continued to be stirred for 4 minutes while maintaining the temperature, mixed with the above-mentioned carboxyl nanoparticles, stirred uniformly, and sonicated for 15 minutes to obtain a silanol dispersion.
(5) 75 parts by weight of acrylonitrile were taken, added to the above-mentioned silanol dispersion, and stirred uniformly, to which 0.9 parts by weight of dicumyl peroxide were added and delivered into a reaction vessel, into which nitrogen gas was introduced, and the mixture was stirred for 1.5 hours while maintaining the temperature at 77.5 °C, discharged, mixed with the above-mentioned esterified dispersion, and stirred to room temperature to obtain a silane polymer solution.
(6) The above-mentioned silane polymer solution was taken and mixed with 65 parts by weight of highly elastic nanoparticles, 30 parts by weight of polymethyl methacrylate, 2.5 parts by weight of glyceryl tristearate, and 1.5 parts by weight of fatty alcohol polyoxyethylene ether and stirred at 350 rpm for 25 minutes to obtain a multicore-monoshell structured gel polymer.

The above-mentioned highly elastic nanoparticle is styrene butadiene rubber; the inorganic nanoparticle is nano-silica; and the base membrane is a polypropylene porous thin film, and has a thickness of 25 µm, a porosity of 45%, and an average pore size of 500 nm.

The above-mentioned multicore-monoshell structured gel polymer was coated to one side of the base membrane by using a coater at a coating speed of 0.5 m/min and a coating thickness of 2.5 µm, and then dried by hot air at a temperature of 40 °C, whereby a multicore-monoshell gel polymer coated separator comprising a base membrane and a multicore-monoshell gel structured polymer coating layer on one side thereof is obtained.

### Example 9

(1) 1.5 parts by weight of 2,2-dimethylolpropionic acid were taken, added to deionized water of 25 times its weight, and stirred uniformly, and 60 parts by weight of inorganic nanoparticles were added, stirred for 45 minutes while maintaining the temperature at 67.5 °C, filtered, and dried at room temperature to obtain carboxyl nanoparticles.
(2) 2.5 parts by weight of tetrakis hydroxymethyl phosphonium sulfate were taken, added to deionized water of 45 times its weight, and stirred uniformly, 3.5 parts by weight of hydroxyethyl cellulose were added, after the temperature was raised to 82.5 °C, the mixture was stirred for 10 minutes while maintaining the temperature, and 0.85 parts by weight of ammonium ethoxylated alkyl sulfate were added and stirred to room temperature to obtain a fiber dispersion.
(3) 0.8 parts by weight of 2-mercaptobenzimidazole were taken, added to anhydrous ethanol of 6 times its weight, stirred uniformly, mixed with the above-mentioned fiber dispersion, delivered into a reaction vessel, stirred for 1.5 hours while maintaining the temperature at 92.5 °C, discharged, mixed with 1 part by weight of zinc pyrithione, and stirred to room temperature to obtain an esterified dispersion.
(4) 4 parts by weight of allyl polyethylene glycol were taken and maintained at a temperature of 80 °C for 18 minutes, to which 0.7 parts by weight of methyl triethoxysilane were added, continued to be stirred for 4 minutes while maintaining the temperature, mixed with the above-mentioned carboxyl nanoparticles, stirred uniformly, and sonicated for 12.5 minutes to obtain a silanol dispersion.
(5) 75 parts by weight of acrylonitrile were taken, added to the above-mentioned silanol dispersion, and stirred uniformly, to which 0.9 parts by weight of dicumyl peroxide were added and delivered into a reaction vessel, into which nitrogen gas was introduced, and the mixture was stirred for 1.5 hours while maintaining the temperature at 77.5 °C, discharged, mixed with the above-mentioned esterified dispersion, and stirred to room temperature to obtain a silane polymer solution.
(6) The above-mentioned silane polymer solution was taken and mixed with 65 parts by weight of highly elastic nanoparticles, 30 parts by weight of polymethyl methacrylate, 2.5 parts by weight of glyceryl tristearate, and 1.5 parts by weight of fatty alcohol polyoxyethylene ether and stirred at 350 rpm for 25 minutes to obtain a multicore-monoshell structured gel polymer.

The above-mentioned highly elastic nanoparticle is styrene butadiene rubber; the inorganic nanoparticle is nano-silica; and the base membrane is a polypropylene porous thin film, and has a thickness of 25 µm, a porosity of 45%, and an average pore size of 500 nm.

The above-mentioned multicore-monoshell structured gel polymer was coated to one side of the base membrane by using a coater at a coating speed of 0.5 m/min and a coating thickness of 2.5 µm, and then dried by hot air at a temperature of 40 °C, whereby a multicore-monoshell gel polymer coated separator comprising a base membrane and a multicore-monoshell gel structured polymer coating layer on one side thereof is obtained.

### Example 10

The present example was different from Example 9 in that the proportions of the raw materials were as follows: 68 parts by weight of highly elastic nanoparticles, 30 parts by weight of inorganic nanoparticles, 30 parts by weight of polymethyl methacrylate, 79 parts by weight of acrylonitrile, 0.9 parts by weight of dicumyl peroxide, 5 parts by weight of allyl polyethylene glycol, 0.6 parts by weight of methyl triethoxysilane, 3 parts by weight of tetrakis hydroxymethyl phosphonium sulfate, 0.8 parts by weight of 2-mercaptobenzimidazole, 3 parts by weight of glyceryl tristearate, 1.5 parts by weight of 2,2-dimethylolpropionic acid, 0.9 parts by weight of zinc pyrithione, 0.8 parts by weight of ammonium ethoxylated alkyl sulfate, 4 parts by weight of hydroxyethyl cellulose, and 1.5 parts by weight of fatty alcohol polyoxyethylene ether.

The thickness of the base membrane was 15 µm, the porosity of the base membrane was 30%, and the average pore size of the base membrane was 100 nm.

The coating speed was 10 m/min, and the coating thickness was 1 µm. The hot air drying was carried out at a temperature of 40 °C.

### Example 11

The present example was different from Example 9 in that the proportions of the raw materials were as follows: 70 parts by weight of highly elastic nanoparticles, 25 parts by weight of inorganic nanoparticles, 40 parts by weight of polymethyl methacrylate, 72 parts by weight of acrylonitrile, 1 part by weight of dicumyl peroxide, 4 parts by weight of allyl polyethylene glycol, 1 part by weight of methyl triethoxysilane, 2.5 parts by weight of tetrakis hydroxymethyl phosphonium sulfate, 1 part by weight of 2-mercaptobenzimidazole, 2.5 parts by weight of glyceryl tristearate, 2 parts by weight of 2,2-dimethylolpropionic acid, 0.6 parts by weight of zinc pyrithione, 0.9 parts by weight of ammonium ethoxylated alkyl sulfate, 3.5 parts by weight of hydroxyethyl cellulose, and 2 parts by weight of fatty alcohol polyoxyethylene ether.

The thickness of the base membrane was 40 µm, the porosity of the base membrane was 60%, and the average pore size of the base membrane was 800 nm.

The coating speed was 30 m/min, and the coating thickness was 4 µm. The hot air drying was carried out at a temperature of 70 °C.

### Example 12

The present example was different from Example 9 in that the proportions of the raw materials were as follows: 70 parts by weight of highly elastic nanoparticles, 30 parts by weight of inorganic nanoparticles, 40 parts by weight of polymethyl methacrylate, 72 parts by weight of acrylonitrile, 0.95 parts by weight of dicumyl peroxide, 4 parts by weight of allyl polyethylene glycol, 0.8 parts by weight of methyl triethoxysilane, 2.8 parts by weight of tetrakis hydroxymethyl phosphonium sulfate, 0.9 parts by weight of 2-mercaptobenzimidazole, 2.8 parts by weight of glyceryl tristearate, 1.8 parts by weight of 2,2-dimethylolpropionic acid, 0.6 parts by weight of zinc pyrithione, 0.85 parts by weight of ammonium ethoxylated alkyl sulfate, 3.8 parts by weight of hydroxyethyl cellulose, and 1.8 parts by weight of fatty alcohol polyoxyethylene ether.

The thickness of the base membrane was 25 µm, the porosity of the base membrane was 40%, and the average pore size of the base membrane was 400 nm.

The coating speed was 15 m/min, and the coating thickness was 2 µm. The hot air drying was carried out at a temperature of 50 °C.

### Example 13

The present example was different from Example 12 in that the thickness of the base membrane was 30 µm, the porosity of the base membrane was 50%, and the average pore size of the base membrane was 500 nm. The coating speed was 25 m/min, and the coating thickness was 3 µm. The hot air drying was carried out at a temperature of 60 °C.

### Example 14

The present example is different from Example 12 in that the highly elastic nanoparticle is a mixture of polyurethane elastomer and cis-polybutadiene rubber, the inorganic nanoparticle is a mixture of nano-titania and nano-montmorillonite, and the base membrane is a thin film composited from a polyethylene porous thin film and a single-sided ceramic coated separator.

### Example 15

The present example is different from Example 12 in that the highly elastic nanoparticle is a mixture of fluoroelastomer, siloxane, and nitrile rubber, the inorganic nanoparticle is a mixture of nano-barium sulfate, nano-silica, and nano-montmorillonite, and the base membrane is a thin film composited from a double-sided ceramic coated separator and a nonwoven separator.

Examples 16 to 30 correspond to Examples 1 to 15 described above, respectively, and Examples 16 to 30 are different from Examples 1 to 15 in that in Examples 16 to 30, the multicore-monoshell structured gel polymer is coating to both sides of the base membrane.

### Comparative Example 1

This comparative example provides an alumina ceramic coated lithium-ion battery separator comprising a polypropylene separator and an alumina coating layer coated on one side thereof, wherein the polypropylene separator has a thickness of 12 µm and a porosity of 45%, and the alumina coating layer has a thickness of 4 µm.

### Comparative Example 2

This comparative example provides an aqueous PVDF-coated lithium-ion battery separator comprising a polypropylene separator and a PVDF coating layer coated on both sides thereof, wherein the polypropylene separator has a thickness of 12 µm and a porosity is 45%, and the coating layer has a thickness of 2 µm.

### Comparative Example 3

In this comparative example, a polypropylene separator having a thickness of 12 µm and a porosity of 45% was used, and no coating treatment was performed on the surface thereof.

### Test Examples

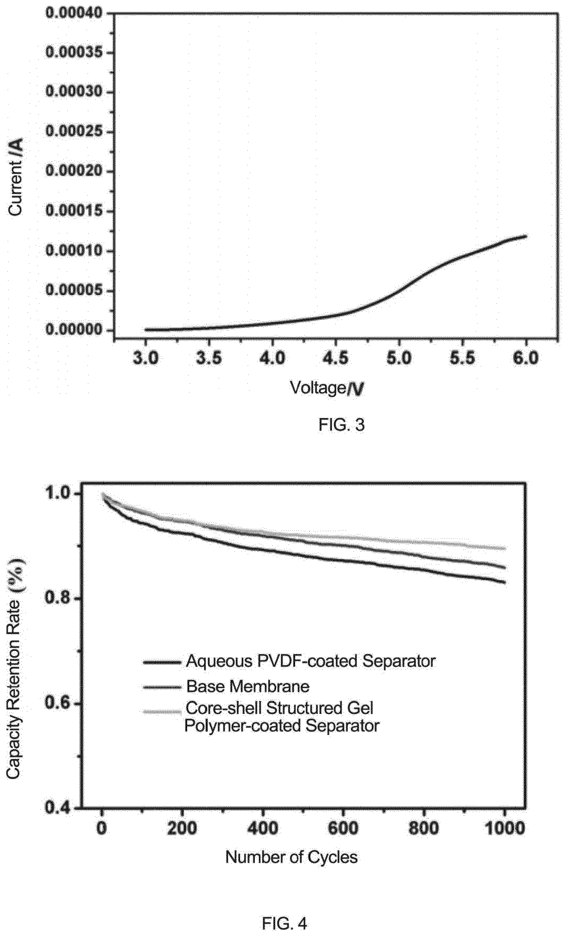

Taking Example 4 as an example, the scanning electron micrograph thereof is as shown in FIG. 1, and the action principle diagram thereof is as shown in FIG. 2. The multicore-monoshell structured gel polymer-coated separator obtained in Example 4 is assembled into a model for linear scanning. The electrochemical window thereof is as shown in FIG. 3. As can be seen from FIG. 3, the coating layer of the separator has an electrochemical window of up to 4.5 V, which is equivalent to that of the electrolytic solution system, and thus can be fully used in a lithium-ion battery.

Taking Example 5 as an example, the cycle performance, rate capabilities, and discharge curves (at 1000th cycle) of lithium batteries respectively assembled from the multicore-monoshell structured gel polymer-coated separator in Example 5, the aqueous PVDF-coated separator in Comparative Example 2, and the base membrane are shown in FIGS. 4-6, respectively.

As can be seen from FIGS. 4-6, the cycle performance of the lithium batteries is as follows: as the number of cycles increases, the capacity retention rate of the lithium battery assembled from the multicore-monoshell structured gel polymer-coated separator in Example 5 is higher than that of the lithium battery assembled from the base membrane, and the capacity of the lithium battery assembled from the base membrane is higher than that of the lithium battery assembled from the aqueous PVDF-coated separator in Comparative Example 2. As the current increases, the capacity retention rate of the lithium battery assembled from the multicore-monoshell structured gel polymer-coated separator in Example 5 is higher than that of the lithium battery assembled from the base membrane, and the capacity of the lithium battery assembled from the base membrane is higher than that of the lithium battery assembled from the aqueous PVDF-coated separator in Comparative Example 2. At the same capacity, the voltage of the lithium battery assembled from the multicore-monoshell structured gel polymer-coated separator in Example 5 is higher than that of the lithium battery assembled from the base membrane, and the voltage of the lithium battery assembled from the base membrane is higher than that of the lithium battery assembled from the aqueous PVDF coated separator in Comparative Example 2. The lithium-ion battery prepared from the multicore-monoshell structured gel polymer-coated separator in Example 5 can have a capacity retention rate up to 90% or more after 1,000 cycles, and have a capacity retention rate of 50% or more at a rate capability of 2C.

Taking Example 6 as an example, the obtained multicore-monoshell structured gel polymer-coated separator was peeled from electrode sheets at a speed of 80 mm/min using a universal tensile tester, the peel strength between the separator and the electrode sheets was 65 N/mm, and the hardness of the battery was tested to be 21.3 N/cm by the three-point bending method, indicating that both the surface hardness and toughness thereof were higher, and could be increased by about 6% to 9% than the surface hardness and toughness of the base membrane.

Taking Example 7 as an example, the multicore-monoshell structured gel polymer-coated separator obtained therein was subjected to a test of liquid absorptivity. The result showed that the separator absorbed the electrolytic solution at a surface absorptivity of 15 g/m².

An ionic conductivity test was performed on the multicore-monoshell structured gel polymer-coated separators obtained in Examples 3 to 7 and the lithium-ion battery separators of Comparative Examples 1-3, the separators were assembled into simulated batteries, and the ionic conductivities of the separators were tested using AC impedance. The test results are listed in Table 1.

**Table 1 Ionic Conductivity of Separators (×10⁻³)**

| | Example 3 | Example 4 | Example 5 | Example 6 | Example 7 | Comparative Example 1 | Comparative Example 2 | Comparative Example 3 |
|---|---|---|---|---|---|---|---|---|
| Ionic conductivity S/cm | 2.87 | 2.62 | 2.57 | 2.85 | 2.76 | 2.12 | 1.11 | 1.96 |

As can be seen from Table 1, the base membrane is coated with a core-shell structured gel polymer coating layer, and after the coating layer absorbs a large amount of the electrolytic solution to gel, the microphase separation between the inorganic and organic particles provides a large number of pore channels through which ions can be conducted, which facilitates the efficiency of migration of lithium ions in the separator and improves the ionic conductivity.

The multicore-monoshell structured gel polymer-coated separators obtained in Examples 10-13 were assembled into simulated batteries to test the ionic conductivities of the separators using the same test method. The results show that the ionic conductivity corresponding to each of Examples 10-13 is higher than the ionic conductivity corresponding to Example 9, and the ionic conductivities corresponding to Example 12 and Example 13 are higher than the ionic conductivities corresponding to Example 10 and Example 11, which indicates that the ratios of raw materials and the preparation processes of Example 12 and Example 13 are better than those of Example 10 and Example 11, and the ratios of raw materials and the preparation processes of Example 10 and Example 11 are better than those of Example 9.

In addition, the multicore-monoshell structured gel polymer-coated separators of Examples 16-30 were assembled into simulated batteries to test the ionic conductivities of the separators using the same test method. The ionic conductivity of each of these examples is higher than those of Comparative Examples 1-3, and the ionic conductivities corresponding to Example 27 and Example 28 are higher than the ionic conductivities corresponding to Example 25 and Example 26, which indicates that the ratios of raw materials and the preparation processes of Example 27 and Example 28 are better than those of Example 25 and Example 26, and the ratios of raw materials and the preparation processes of Example 25 and Example 26 are better than those of Example 24.

The above description is merely illustrative of preferred examples of the present disclosure and is not intended to limit the present disclosure. It would be understood by those skilled in the art that various modifications and variations can be made to the present invention, and shall be included in the scope of its protection as long as being within the scope of the present claims.

### Industrial Applicability

The multicore-monoshell structured gel polymer-coated separator provided in the present disclosure has high ionic conductivity, high dielectric constant, and excellent battery performance. The method of preparing the same is simple and practical, and the finished product thus produced has good quality. Wherein, the method of preparing a multicore-monoshell structured gel polymer is advantageous to an improvement of the overall performance of a finished coating film such as stability and strength, flame retardancy, surface strength, toughness, etc. The use of the multicore-monoshell structured gel polymer-coated separator in a lithium-ion battery, including its use in the preparation of a gel-state polymer lithium-ion battery, can improve the manufacturing efficiency, safety, and consistency of the battery.

## Claims

1. A multicore-monoshell structured gel polymer-coated separator, comprising a base membrane and a multicore-monoshell structured gel polymer coating layer on one or both sides of the base membrane, **characterized in** the multicore-monoshell structured gel polymer consisting of following raw materials: 60-70 parts by weight of highly elastic nanoparticles, 20-30 parts by weight of inorganic nanoparticles, 20-40 parts by weight of polymethyl methacrylate, 70-80 parts by weight of acrylonitrile, 0.8-1 part by weight of dicumyl peroxide, 3-5 parts by weight of allyl polyethylene glycol, 0.4-1 part by weight of methyl triethoxysilane, 2-3 parts by weight of tetrakis hydroxymethyl phosphonium sulfate, 0.6-1 part by weight of 2-mercaptobenzimidazole, 2-3 parts by weight of glyceryl tristearate, 1-2 parts by weight of 2,2-dimethylolpropionic acid, 0.3-1 part by weight of zinc pyrithione, 0.7-1 part by weight of ammonium ethoxylated alkyl sulfate, 3-4 parts by weight of hydroxyethyl cellulose, and 1-2 parts by weight of fatty alcohol polyoxyethylene ether, wherein the highly elastic nanoparticle is any one selected from the group consisting of nitrile-polyvinyl chloride composite elastomer, vulcanized rubber, polyurethane elastomer, nitrile rubber, styrene butadiene rubber, fluoroelastomer, polyester-polyether, cis-polybutadiene rubber, and siloxane, or consists of at least two from the group.

2. The multicore-monoshell structured gel polymer-coated separator according to claim 1, **characterized in that** the multicore-monoshell structured gel polymer consists of following raw materials: 68-70 parts by weight of the highly elastic nanoparticles, 25-30 parts by weight of the inorganic nanoparticles, 30-40 parts by weight of the polymethyl methacrylate, 72-79 parts by weight of the acrylonitrile, 0.9-1 part by weight of the dicumyl peroxide, 4-5 parts by weight of the allyl polyethylene glycol, 0.6-1 part by weight of the methyl triethoxysilane, 2.5-3 parts by weight of the tetrakis hydroxymethyl phosphonium sulfate, 0.8-1 part by weight of the 2-mercaptobenzimidazole, 2.5-3 parts by weight of the glyceryl tristearate, 1.5-2 parts by weight of the 2,2-dimethylolpropionic acid, 0.6-0.9 parts by weight of the zinc pyrithione, 0.8-0.9 parts by weight of the ammonium ethoxylated alkyl sulfate, 3.5-4 parts by weight of the hydroxyethyl cellulose, and 1.5-2 parts by weight of the fatty alcohol polyoxyethylene ether.

3. The multicore-monoshell structured gel polymer-coated separator according to claim 2, **characterized in that** the multicore-monoshell structured gel polymer consists of following raw materials: 70 parts by weight of the highly elastic nanoparticles, 30 parts by weight of the inorganic nanoparticles, 40 parts by weight of the polymethyl methacrylate, 72 parts by weight of the acrylonitrile, 0.95 part by weight of the dicumyl peroxide, 4 parts by weight of the allyl polyethylene glycol, 0.8 parts by weight of the methyl triethoxysilane, 2.8 parts by weight of the tetrakis hydroxymethyl phosphonium sulfate, 0.9 parts by weight of the 2-mercaptobenzimidazole, 2.8 parts by weight of the glyceryl tristearate, 1.8 parts by weight of the 2,2-dimethylolpropionic acid, 0.6 parts by weight of the zinc pyrithione, 0.85 parts by weight of the ammonium ethoxylated alkyl sulfate, 3.8 parts by weight of the hydroxyethyl cellulose, and 1.8 parts by weight of the fatty alcohol polyoxyethylene ether.

4. The multicore-monoshell structured gel polymer-coated separator according to any one of claims 1 to 3, **characterized in that** the inorganic nanoparticle is any one selected from the group consisting of nano-silica, nano-alumina, nano-barium titanate, nano-titania, nano-barium sulfate, nano-montmorillonite, nano-calcium carbonate, and nano-zirconia, or consists of at least two from the group.

5. The multicore-monoshell structured gel polymer-coated separator according to any one of claims 1 to 4, **characterized in that** the base membrane is any one selected from the group consisting of a polypropylene porous thin film, a polyethylene porous thin film, a polypropylene-polyethylene-polypropylene three-layered composite porous thin film, a single-sided ceramic coated separator, a double-sided ceramic coated separator, and a nonwoven separator, or consists of at least two from the group.

6. The multicore-monoshell structured gel polymer-coated separator according to any one of claims 1 to 5, **characterized in that** the base membrane has a thickness of 5-50 µm.

7. The multicore-monoshell structured gel polymer-coated separator according to any one of claims 1 to 6, **characterized in that** the base membrane has a porosity of 20%-70%.

8. The multicore-monoshell structured gel polymer-coated separator according to any one of claims 1 to 7, **characterized in that** the base membrane has an average pore size of 10-1000 nm.

9. A method of preparing the multicore-monoshell structured gel polymer-coated separator as claimed in any one of claims 1 to 8, **characterized by** comprising following steps: coating the multicore-monoshell structured gel polymer onto one or both sides of the base membrane, and then drying the same.

10. The method of preparing the multicore-monoshell structured gel polymer-coated separator according to claim 9, **characterized in that** the hot air drying is carried out at a temperature of 30 to 80 °C.

11. The method of preparing the multicore-monoshell structured gel polymer-coated separator according to claim 9 or 10, **characterized in that** a speed of the coating is 0.5 to 40 m/min;
wherein a thickness of the coating is between 0.5 and 5 µm.

12. The method of preparing the multicore-monoshell structured gel polymer-coated separator according to any one of claims 9 to 11, **characterized in that** a method of preparing the multicore-monoshell structured gel polymer in the multicore-monoshell structured gel polymer-coated separator comprises following steps:
mixing the 2,2-dimethylolpropionic acid with the inorganic nanoparticles to obtain carboxyl nanoparticles; mixing the tetrakis hydroxymethyl phosphonium sulfate, the hydroxyethyl cellulose, and the ammonium ethoxylated alkyl sulfate to obtain a fiber dispersion; mixing the 2-mercaptobenzimidazole, the fiber dispersion, and the zinc pyrithione to obtain an esterified dispersion; mixing the allyl polyethylene glycol, the methyl triethoxysilane, and the carboxyl nanoparticles to obtain a silanol dispersion; mixing the acrylonitrile, the silanol dispersion, the dicumyl peroxide, and the esterified dispersion to obtain a silane polymer solution; mixing the silane polymer solution, the highly elastic nanoparticles, the polymethyl methacrylate, the glyceryl tristearate, and the fatty alcohol polyoxyethylene ether to obtain a multicore-monoshell structured gel polymer.

13. The method of preparing the multicore-monoshell structured gel polymer-coated separator according to claim 12, **characterized in that** the method of preparing the multicore-monoshell structured gel polymer in the multicore-monoshell structured gel polymer-coated separator further comprises following steps:
(1) adding the 2,2-dimethylolpropionic acid to deionized water and stirring uniformly, and adding the inorganic nanoparticles, and stirring while maintaining temperature, filtering, and drying at room temperature to obtain carboxyl nanoparticles;
wherein, a weight ratio of the 2,2-dimethylolpropionic acid to deionized water is (1:20) to (1:30); the stirring while maintaining the temperature is carried out at a temperature of 65 to 70 °C; and the stirring while maintaining the temperature is carried out for a period of time of 40 to 50 minutes;
(2) adding the tetrakis hydroxymethyl phosphonium sulfate to deionized water and stirring uniformly, adding the hydroxyethyl cellulose and stirring while maintaining an increased temperature, and adding the ammonium ethoxylated alkyl sulfate and stirring to room temperature to obtain a fiber dispersion,
wherein, a weight ratio of the tetrakis hydroxymethyl phosphonium sulfate to deionized water is (1:41) to (1:50); the increased temperature is 80 to 85 °C; and the stirring while maintaining the temperature is carried out for a period of time of 10 to 22 minutes;
(3) adding the 2-mercaptobenzimidazole to anhydrous ethanol, stirring uniformly, mixing with the fiber dispersion, delivering into a reaction vessel, stirring while maintaining the temperature, discharging, mixing with the zinc pyrithione and stirring to room temperature to obtain an esterified dispersion,
wherein, a weight ratio of the 2-mercaptobenzimidazole to anhydrous ethanol is (1:5) to (1:8); the stirring while maintaining the temperature is carried out at a temperature of 90 to 95 °C; and the stirring while maintaining the temperature is carried out for a period of time of 1 to 2 hours;
(4) adding the allyl polyethylene glycol to the methyl triethoxysilane, stirring while maintaining the temperature, mixing with the carboxyl nanoparticles, and stirring uniformly to obtain a silanol dispersion,
wherein, the allyl polyethylene glycol is maintained at a temperature of 60 to 80 °C for 16 to 20 minutes, prior to the addition of methyl triethoxysilane; the stirring while maintaining the temperature is carried out for a period of time of 4 to 10 minutes; a sonicating step is further included after mixing with the carboxyl nanoparticles and stirring, and the sonication is carried out for a period of time of 10 to 15 minutes;
(5) adding the acrylonitrile to the silanol dispersion and stirring uniformly, adding the dicumyl peroxide, delivering into a reaction vessel introducing nitrogen gas to the reaction vessel, and stirring the mixture while maintaining the temperature, discharging, mixing with the esterified dispersion, and stirring to room temperature to obtain a silane polymer solution,
wherein, the stirring while maintaining the temperature is carried out at a temperature of 75 to 80 °C; and the stirring while maintaining the temperature is carried out for a period of time of 1 to 2 hours; and
(6) mixing the silane polymer solution with the highly elastic nanoparticles, the polymethyl methacrylate, the glyceryl tristearate, and the fatty alcohol polyoxyethylene ether, and stirring to obtain the multicore-monoshell structured gel polymer,
wherein, speed of the stirring is 300 to 400 rpm; and the stirring is carried out for a period of time of 20 to 30 minutes.

14. Use of a multicore-monoshell structured gel polymer-coated separator as claimed in any one of claims 1 to 8, **characterized in that** the multicore-monoshell structured gel polymer-coated separator is used for preparation of a lithium battery.

## Patentansprüche

1. Mit Multicore-Monoshell-strukturiertem Gel-Polymer beschichteter Separator, der eine Basismembran und eine Überzugsschicht aus Multicore-Monoshell-strukturiertem Gel-Polymer auf einer oder beiden Seiten der Basismembran umfasst, , **dadurch gekennzeichnet, dass** das Multicore-Monoshell-strukturierte Gel-Polymer aus folgenden Rohmaterialien besteht: 60 - 70 Massenanteile hochelastische Nanopartikel, 20 - 30 Massenanteile anorganische Nanopartikel, 20 - 40 Massenanteile Polymethylmethacrylat, 70 - 80 Massenanteile Acrylnitril, 0,8 - 1 Massenanteile Dicumylperoxid, 3 - 5 Massenanteile Allylpolyethylenglykol, 0,4 - 1 Massenanteile Methyltriethoxysilan, 2 - 3 Massenanteile Tetrakis(hydroxymethyl)phosphoniumsulfat, 0,6 - 1 Massenanteile 2-Mercaptobenzimidazol, 2 - 3 Massenanteile Glyceryltristearat, 1 - 2 Massenanteile 2,2-Dimethylolpropionsäure, 0,3 - 1 Massenanteile Zinkpyrithion, 0,7 - 1 Massenanteile ammoniumethoxyliertes Alkylsulfat, 3 - 4 Massenanteile Hydroxyethylcellulose, und 1 - 2 Massenanteile Fettalkohol-Polyoxyethylenether, wobei das hochelastische Nanopartikel eines ist, ausgewählt aus der Gruppe bestehend aus Nitril-Polyvinylchlorid-Verbundelastomer, vulkanisiertem Kautschuk, Polyurethanelastomer, Nitrilkautschuk, Styrol-Butadien-Kautschuk, Fluorelastomer, Polyester-Polyether, cis-Polybutadien-Kautschuk und Siloxan, oder aus mindestens zwei aus der Gruppe besteht.

2. Mit Multicore-Monoshell-strukturiertem Gel-Polymer beschichteter Separator nach Anspruch 1, **dadurch gekennzeichnet, dass** das Multicore-Monoshell-strukturierte Gel-Polymer aus folgenden Rohmaterialien besteht: 68 - 70 Massenanteile der hochelastischen Nanopartikel, 25 - 30 Massenanteile der anorganischen Nanopartikel, 30 - 40 Massenanteile des Polymethylmethacrylats, 72 - 79 Massenanteile des Acrylnitrils, 0,9 - 1 Massenanteile des Dicumylperoxids, 4 - 5 Massenanteile des Allylpolyethylenglykols, 0,6 - 1 Massenanteile des Methyltriethoxysilans, 2,5 - 3 Massenanteile des Tetrakis(hydroxymethyl)phosphoniumsulfats, 0,8 - 1 Massenanteile des 2-Mercaptobenzimidazols, 2,5 - 3 Massenanteile des Glyceryltristearats, 1,5 - 2 Massenanteile der 2,2-Dimethylolpropionsäure, 0,6 - 0,9 Massenanteile des Zinkpyrithions, 0,8 - 0,9 Massenanteile des ethoxylierten Ammoniumalkylsulfats, 3,5 - 4 Massenanteile der Hydroxyethylcellulose, und 1,5 - 2 Massenanteile des Fettalkohol-Polyoxyethylenethers.

3. Mit Multicore-Monoshell-strukturiertem Gel-Polymer beschichteter Separator nach Anspruch 2, **dadurch gekennzeichnet, dass** das Multicore-Monoshell-strukturierte Gel-Polymer aus folgenden Rohmaterialien besteht: 70 Massenanteile der hochelastischen Nanopartikel, 30 Massenanteile der anorganischen Nanopartikel, 40 Massenanteile des Polymethylmethacrylats, 72 Massenanteile des Acrylnitrils, 0,95 Massenanteile des Dicumylperoxids, 4 Massenanteile des Allylpolyethylenglykols, 0,8 Massenanteile des Methyltriethoxysilans, 2,8 Massenanteile des Tetrakis(hydroxymethyl)phosphoniumsulfats, 0,9 Massenanteile des 2-Mercaptobenzimidazols, 2,8 Massenanteile des Glyceryltristearats, 1,8 Massenanteile der 2,2-Dimethylolpropionsäure, 0,6 Massenanteile des Zinkpyrithions, 0,85 Massenanteile des ammoniumethoxylierten Alkylsulfats, 3,8 Massenanteile der Hydroxyethylcellulose, und 1,8 Massenanteile des Fettalkohol-Polyoxyethylenethers.

4. Mit Multicore-Monoshell-strukturiertem Gel-Polymer beschichteter Separator nach einem der Ansprüche 1 bis 3, **dadurch gekennzeichnet, dass** das anorganische Nanopartikel eines ist, ausgewählt aus der Gruppe bestehend aus Nano-Siliciumdioxid, Nano-Aluminiumoxid, Nano-Bariumtitanat, Nano-Titanoxid, Nano-Bariumsulfat, Nano-Montmorillonit, Nano-Calciumcarbonat und Nano-Zirconiumdioxid, oder aus mindestens zwei aus der Gruppe besteht.

5. Mit Multicore-Monoshell-strukturiertem Gel-Polymer beschichteter Separator nach einem der Ansprüche 1 bis 4, **dadurch gekennzeichnet, dass** die Basismembran eine ist, ausgewählt aus der Gruppe bestehend aus einem porösen Polypropylen-Dünnfilm, einem porösen Polyethylen-Dünnfilm, einem dreischichtigen porösen Polypropylen-Polyethylen-Polypropylen-Verbunddünnfilm, einem einseitig keramikbeschichteten Separator, einem doppelseitig keramikbeschichteten Separator und einem Vliesstoff-Separator, oder aus mindestens zwei aus der Gruppe besteht.

6. Mit Multicore-Monoshell-strukturiertem Gel-Polymer beschichteter Separator nach einem der Ansprüche 1 bis 5, **dadurch gekennzeichnet, dass** die Basismembran eine Dicke von 5 - 50 pm aufweist.

7. Mit Multicore-Monoshell-strukturiertem Gel-Polymer beschichteter Separator nach einem der Ansprüche 1 bis 6, **dadurch gekennzeichnet, dass** die Basismembran eine Porosität von 20 % bis 70 % aufweist.

8. Mit Multicore-Monoshell-strukturiertem Gel-Polymer beschichteter Separator nach einem der Ansprüche 1 bis 7, **dadurch gekennzeichnet, dass** die Basismembran eine durchschnittliche Porengröße von 10 - 1000 nm aufweist.

9. Verfahren des Herstellens des mit Multicore-Monoshell-strukturiertem Gel-Polymer beschichteten Separators nach einem der Ansprüche 1 bis 8, **dadurch gekennzeichnet, dass** es folgende Schritte umfasst: Auftragen des Multicore-Monoshell-strukturierten Gel-Polymers auf eine oder beide Seiten der Basismembran und anschließendes Trocknen derselben.

10. Verfahren des Herstellens des mit Multicore-Monoshell-strukturiertem Gel-Polymer beschichteten Separators gemäß Anspruch 9, **dadurch gekennzeichnet, dass** das Heißlufttrocknen bei einer Temperatur von 30 bis 80 °C durchgeführt wird.

11. Verfahren des Herstellens des mit Multicore-Monoshell-strukturiertem Gel-Polymer beschichteten Separators nach Anspruch 9 oder 10, **dadurch gekennzeichnet, dass** die Geschwindigkeit des Beschichtens 0,5 bis 40 m/min beträgt,
wobei die Dicke der Beschichtung zwischen 0,5 und 5 pm liegt.

12. Verfahren des Herstellens des mit Multicore-Monoshell-strukturiertem Gel-Polymer beschichteten Separators gemäß einem der Ansprüche 9 bis 11, **dadurch gekennzeichnet, dass** ein Verfahren des Herstellens des Multicore-Monoshell-strukturierten Gel-Polymers in dem Multicore-Monoshell-strukturiertem Gel-Polymer beschichteten Separator folgende Schritte umfasst:
Mischen der 2,2-Dimethylolpropionsäure mit den anorganischen Nanopartikeln, damit Carboxyl-Nanopartikeln erhalten werden; Mischen des Tetrakis(hydroxymethyl)phosphoniumsulfats, der Hydroxyethylcellulose und des ammoniumethoxylierten Alkylsulfats, damit eine Faserdispersion erhalten wird; Mischen des 2-Mercaptobenzimidazols, der Faserdispersion und des Zinkpyrithions, damit eine veresterte Dispersion erhalten wird; Mischen des Allylpolyethylenglykols, des Methyltriethoxysilans und der Carboxylnanopartikel, damit eine Silanoldispersion erhalten wird; Mischen des Acrylnitrils, der Silanoldispersion, des Dicumylperoxids und der veresterten Dispersion, damit eine Silanpolymerlösung erhalten wird; Mischen der Silanpolymerlösung, der hochelastischen Nanopartikel, des Polymethylmethacrylats, des Glyceryltristearats und des Fettalkohol-Polyoxyethylenethers, damit ein Gel-Polymer mit Multicore-Monoshell-Struktur erhalten wird.

13. Verfahren des Herstellens des mit Multicore-Monoshell-strukturiertem Gel-Polymer beschichteten Separators gemäß Anspruch 12, **dadurch gekennzeichnet, dass** das Verfahren des Herstellens des Multicore-Monoshell-strukturierten Gel-Polymers in dem mit Multicore-Monoshell-strukturiertem Gel-Polymer beschichteten Separator ferner folgende Schritte umfasst:
(1) Zugeben der 2,2-Dimethylolpropionsäure zu entionisiertem Wasser und gleichmäßiges Rühren, Zugeben der anorganischen Nanopartikel und Rühren unter Aufrechterhalten der Temperatur, Filtrieren und Trocknen bei Raumtemperatur, damit Carboxyl-Nanopartikel erhalten wird;
wobei das Massenverhältnis der 2,2-Dimethylolpropionsäure zu entionisiertem Wasser (1:20) bis (1:30) beträgt, das Rühren unter Aufrechterhalten der Temperatur bei einer Temperatur von 65 bis 70 °C durchgeführt wird und das Rühren unter Aufrechterhalten der Temperatur über eine Zeitdauer von 40 bis 50 Minuten durchgeführt wird;
(2) Zugeben des Tetrakis(hydroxymethyl)phosphoniumsulfats zu entionisiertem Wasser und gleichmäßiges Rühren, Zugeben der Hydroxyethylcellulose und Rühren unter Aufrechterhalten einer erhöhten Temperatur und Zugeben des Ammonium-ethoxylierten Alkylsulfats und Rühren auf Raumtemperatur, damit eine Faserdispersion erhalten wird,
wobei das Massenverhältnis von Tetrakis(hydroxymethyl)phosphoniumsulfat zu entionisiertem Wasser (1:41) bis (1:50) beträgt, die erhöhte Temperatur 80 bis 85 °C beträgt und das Rühren unter Aufrechterhalten der Temperatur über einen Zeitraum von 10 bis 22 Minuten durchgeführt wird;
(3) Zugeben des 2-Mercaptobenzimidazols zu wasserfreiem Ethanol, gleichmäßiges Rühren, Mischen mit der Faserdispersion, Einbringen in ein Reaktionsgefäß, Rühren unter Aufrechterhalten der Temperatur, Entleeren, Mischen mit dem Zinkpyrithion und Rühren auf Raumtemperatur, damit eine veresterte Dispersion erhalten wird,
wobei das Massenverhältnis von 2-Mercaptobenzimidazol zu wasserfreiem Ethanol (1:5) bis (1:8) beträgt, das Rühren unter Aufrechterhalten der Temperatur bei einer Temperatur von 90 bis 95 °C durchgeführt wird und das Rühren unter Aufrechterhalten der Temperatur über eine Zeitdauer von 1 bis 2 Stunden durchgeführt wird;
(4) Zugeben des Allylpolyethylenglykols zum Methyltriethoxysilan, Rühren unter Aufrechterhalten der Temperatur, Mischen mit den Carboxyl-Nanopartikeln und gleichmäßiges Rühren, damit eine Silanoldispersion erhalten wird,
wobei das Allylpolyethylenglykol vor dem Zugeben von Methyltriethoxysilan 16 bis 20 Minuten lang auf einer Temperatur von 60 bis 80 °C gehalten wird, das Rühren während des Aufrechterhaltens der Temperatur über einen Zeitraum von 4 bis 10 Minuten durchgeführt wird, nach dem Mischen mit den Carboxylnanopartikeln und dem Rühren ferner ein Beschallungsschritt erfolgt und die Beschallung über einen Zeitraum von 10 bis 15 Minuten durchgeführt wird;
(5) Zugeben des Acrylnitrils zu der Silanoldispersion und gleichmäßiges Rühren, Zugeben des Dicumylperoxids, Einbringen in ein Reaktionsgefäß, Einleiten von Stickstoffgas in das Reaktionsgefäß und Rühren des Gemisches unter Aufrechterhalten der Temperatur, Entleeren, Mischen mit der veresterten Dispersion und Rühren auf Raumtemperatur, damit eine Silanpolymerlösung erhalten wird,
wobei das Rühren unter Aufrechterhalten der Temperatur bei einer Temperatur von 75 bis 80 °C durchgeführt wird und das Rühren unter Aufrechterhalten der Temperatur über einen Zeitraum von 1 bis 2 Stunden durchgeführt wird, und
(6) Mischen der Silanpolymerlösung mit den hochelastischen Nanopartikeln, dem Polymethylmethacrylat, dem Glyceryltristearat und dem Fettalkohol-Polyoxyethylenether und Rühren, damit das Gel-Polymer mit Multicore-Monoshell-Struktur erhalten wird,
wobei die Rührgeschwindigkeit 300 bis 400 1/min beträgt und das Rühren über einen Zeitraum von 20 bis 30 Minuten durchgeführt wird.

14. Verwendung eines mit Multicore-Monoshell-strukturiertem Gel-Polymer beschichteten Separators nach einem der Ansprüche 1 bis 8, **dadurch gekennzeichnet, dass** der mit Multicore-Monoshell-strukturiertem Gel-Polymer beschichtete Separator zur Herstellung einer Lithiumbatterie verwendet wird.

## Revendications

1. Séparateur revêtu d'un gel polymère structuré multicoeur monocoque, comprenant une membrane de base et une couche de revêtement de gel polymère structuré multicoeur-monocoque sur un ou les deux côtés de la membrane de base, **caractérisé en ce que** le gel polymère structuré multicoeur-monocoque est constitué des matières premières suivantes : 60 à 70 parties en poids de nanoparticules hautement élastiques, 20 à 30 parties en poids de nanoparticules inorganiques, 20 à 40 parties en poids de polyméthacrylate de méthyle, 70 à 80 parties en poids d'acrylonitrile, 0,8 à 1 partie en poids de peroxyde de dicumyle, 3 à 5 parties en poids d'allyl polyéthylène glycol, 0,4 à 1 partie en poids de méthyl triéthoxysilane, 2 à 3 parties en poids de sulfate de tétrakis hydroxyméthyl phosphonium, 0,6 à 1 partie en poids de 2-mercaptobenzimidazole, 2 à 3 parties en poids de tristéarate de glycéryle, 1 à 2 parties en poids d'acide 2,2-diméthylolpropionique, 0,3 à 1 partie en poids de pyrithione de zinc, 0,7 à 1 partie en poids d'alkylsulfate éthoxylé d'ammonium, 3 à 4 parties en poids d'hydroxyéthylcellulose, et 1 à 2 parties en poids d'éther de polyoxyéthylène d'alcool gras, dans lequel la nanoparticule hautement élastique est l'une quelconque choisie dans le groupe constitué d'un élastomère composite chlorure de nitrile-polyvinyle, caoutchouc vulcanisé, élastomère polyuréthane, caoutchouc nitrile, caoutchouc styrène butadiène, fluoroélastomère, polyester-polyéther, caoutchouc cis-polybutadiène et siloxane, ou est constitué d'au moins deux éléments du groupe.

2. Séparateur revêtu de gel polymère structuré multicoeur-monocoque selon la revendication 1, **caractérisé en ce que** le gel polymère structuré multicoeur-monocoque est constitué des matières premières suivantes : 68 à 70 parties en poids des nanoparticules hautement élastiques, 25 à 30 parties en poids des nanoparticules inorganiques, 30 à 40 parties en poids du polyméthacrylate de méthyle, 72 à 79 parties en poids de l'acrylonitrile, 0,9 à 1 partie en poids du peroxyde de dicumyle, 4 à 5 parties en poids de l'allyl polyéthylène glycol, 0,6 à 1 partie en poids du méthyl triéthoxysilane, 2,5 à 3 parties en poids du sulfate de tétrakis hydroxyméthyl phosphonium, 0,8 à 1 partie en poids du 2 -mercaptobenzimidazole, 2,5 à 3 parties en poids du tristéarate de glycéryle, 1,5 à 2 parties en poids de l'acide 2,2-diméthylolpropionique, 0,6 à 0,9 partie en poids de pyrithione de zinc, 0,8 à 0,9 partie en poids du sulfate d'alkyle d'ammonium éthoxylé, 3,5 à 4 parties en poids de l'hydroxyéthylcellulose et 1,5 à 2 parties en poids de l'éther de polyoxyéthylène d'alcool gras.

3. Séparateur revêtu de gel polymère structuré multicoeur-monocoque selon la revendication 2, **caractérisé en ce que** le gel polymère structuré multicoeur-monocoque est constitué des matières premières suivantes : 70 parties en poids des nanoparticules hautement élastiques, 30 parties en poids des nanoparticules inorganiques, 40 parties en poids du polyméthacrylate de méthyle, 72 parties en poids de l'acrylonitrile, 0,95 partie en poids du peroxyde de dicumyle, 4 parties en poids du l'allyl polyéthylène glycol, 0,8 partie en poids du méthyl triéthoxysilane, 2,8 parties en poids du sulfate de tétrakis hydroxyméthyl phosphonium, 0,9 partie en poids du 2-mercaptobenzimidazole, 2,8 parties en poids du tristéarate de glycéryle, 1,8 partie en poids du acide 2,2-diméthylolpropionique, 0,6 partie en poids de pyrithione de zinc, 0,85 partie en poids d'alkylsulfate d'ammonium éthoxylé, 3,8 parties en poids d'hydroxyéthylcellulose et 1,8 partie en poids d'éther polyoxyéthylène d'alcool gras.

4. Séparateur revêtu de gel polymère structuré multicoeur-monocoque selon l'une quelconque des revendications 1 à 3, **caractérisé en ce que** la nanoparticule inorganique est l'une quelconque choisie dans le groupe constitué de nano-silice, nano-alumine, nano-titanate de baryum, nano-oxyde de titane, sulfate de nano-baryum, nano-montmorillonite, carbonate de nano-calcium et nano-zircone, ou est constituée d'au moins deux éléments de ce groupe.

5. Séparateur revêtu de gel polymère structuré multicoeur-monocoque selon l'une quelconque des revendications 1 à 4, **caractérisé en ce que** la membrane de base est l'une quelconque choisie dans le groupe constitué d'un film mince poreux en polypropylène, un film mince poreux en polyéthylène, un film mince poreux composite à trois couches polypropylène-polyéthylène-polypropylène, un séparateur revêtu de céramique simple face, un séparateur revêtu de céramique double face et un séparateur non tissé, ou est constituée d'au moins deux éléments de ce groupe.

6. Séparateur revêtu de gel polymère structuré multicoeur-monocoque selon l'une quelconque des revendications 1 à 5, **caractérisé en ce que** la membrane de base a une épaisseur de 5 à 50 µm.

7. Séparateur revêtu de gel polymère structuré multicoeur-monocoque selon l'une quelconque des revendications 1 à 6, **caractérisé en ce que** la membrane de base a une porosité de 20 % à 70 %.

8. Séparateur revêtu de gel polymère structuré multicoeur-monocoque selon l'une quelconque des revendications 1 à 7, **caractérisé en ce que** la membrane de base a une taille moyenne de pores de 10 à 1000 nm.

9. Procédé de préparation du séparateur revêtu de gel polymère structuré multicoeur-monocoque selon l'une quelconque des revendications 1 à 8, **caractérisé en ce qu'**il comprend les étapes suivantes : revêtement du gel polymère structuré multicoeur-monocoque sur une ou les deux faces de la membrane de base, et ensuite séchage de celui-ci.

10. Procédé de préparation du séparateur revêtu de gel polymère structuré multicoeur-monocoque selon la revendication 9, **caractérisé en ce que** le séchage à l'air chaud est effectué à une température de 30 à 80° C.

11. Procédé de préparation du séparateur revêtu de gel polymère structuré multicoeur-monocoque selon la revendication 9 ou 10, **caractérisé en ce que** la vitesse du revêtement est de 0,5 à 40 m/min ;
dans lequel une épaisseur du revêtement est comprise entre 0,5 et 5 µm.

12. Procédé de préparation du séparateur revêtu de gel polymère structuré multicoeur-monocoque selon l'une quelconque des revendications 9 à 11, **caractérisé en ce qu'**un procédé de préparation du gel polymère structuré multicoeur-monocoque dans le séparateur revêtu de gel polymère structuré multicoeur-monocoque comprend les étapes suivantes :
mélange de l'acide 2,2-diméthylolpropionique avec les nanoparticules inorganiques pour obtenir des nanoparticules carboxyliques ; mélange du sulfate de tétrakis hydroxyméthyl phosphonium, l'hydroxyéthyl cellulose et l'alkyl sulfate éthoxylé d'ammonium pour obtenir une dispersion de fibres ; mélange du 2-mercaptobenzimidazole, de la dispersion de fibres et la pyrithione de zinc pour obtenir une dispersion estérifiée ; mélange de l'allyl polyéthylène glycol, du méthyl triéthoxysilane et des nanoparticules de carboxyle pour obtenir une dispersion de silanol ; mélange de l'acrylonitrile, la dispersion de silanol, du peroxyde de dicumyle et de la dispersion estérifiée pour obtenir une solution de polymère de silane ; mélange de la solution de polymère de silane, des nanoparticules hautement élastiques, du polyméthacrylate de méthyle, du tristéarate de glycéryle et de l'éther de polyoxyéthylène d'alcool gras pour obtenir un gel polymère structuré multicoeur monocoque.

13. Procédé de préparation du séparateur revêtu de gel polymère structuré multicoeur-monocoque selon la revendication 12, **caractérisé en ce que** le procédé de préparation de gel polymère structuré multicoeur-monocoque dans le séparateur revêtu de gel polymère structuré multicoeur-monocoque comprend en outre les étapes suivantes :
(1) ajout de l'acide 2,2-diméthylolpropionique à de l'eau désionisée et agitation uniforme, et ajout des nanoparticules inorganiques, et agitation tout en maintenant la température, filtrage et séchage à température ambiante pour obtenir des nanoparticules carboxyliques ;
dans lequel, un rapport pondéral de l'acide 2,2-diméthylolpropionique à l'eau désionisée est de (1:20) à (1:30) ; l'agitation tout en maintenant la température est réalisée à une température de 65 à 70° C ; et l'agitation tout en maintenant la température est effectuée pendant une durée de 40 à 50 minutes ;
(2) ajout du sulfate de tétrakis hydroxyméthyl phosphonium à de l'eau désionisée et agitation uniforme, ajout de l'hydroxyéthyl cellulose et agitation tout en maintenant une température augmentée, et ajout de l'alkylsulfate éthoxylé d'ammonium et agitation à température ambiante pour obtenir une dispersion de fibres,
dans lequel, un rapport pondéral du sulfate de tétrakis hydroxyméthyl phosphonium à l'eau désionisée est de (1:41) à (1:50) ; la température augmentée est de 80 à 85 °C ; et l'agitation en maintenant la température est effectuée pendant une durée de 10 à 22 minutes ;
(3) ajout du 2-mercaptobenzimidazole à de l'éthanol anhydre, agitation uniforme, mélange avec la dispersion de fibres, déversement dans un récipient de réaction, agitation tout en maintenant la température, décharge, mélange avec la pyrithione de zinc et agitation à température ambiante pour obtenir une dispersion estérifiée,
dans lequel, un rapport pondéral du 2-mercaptobenzimidazole à l'éthanol anhydre est de (1:5) à (1:8) ; l'agitation tout en maintenant la température est effectuée à une température de 90 à 95° C ; et l'agitation tout en maintenant la température est effectuée pendant une durée de 1 à 2 heures ;
(4) ajout de l'allyl polyéthylène glycol au méthyl triéthoxysilane, agitation tout en maintenant la température, mélange avec les nanoparticules carboxyle, et agitation uniforme pour obtenir une dispersion de silanol,
dans lequel, l'allyl polyéthylène glycol est maintenu à une température de 60 à 80° C pendant 16 à 20 minutes, avant l'ajout de méthyl triéthoxysilane ; l'agitation tout en maintenant la température est effectuée pendant une durée de 4 à 10 minutes ; une étape de sonication est en outre incluse après mélange avec les nanoparticules de carboxyle et agitation, et la sonication est effectuée pendant une durée de 10 à 15 minutes ;
(5) ajout de l'acrylonitrile à la dispersion de silanol et agitation uniforme, ajout du peroxyde de dicumyle, déversement dans un récipient de réaction, introduction de gaz azote dans le récipient de réaction, et agitation du mélange tout en maintenant la température, décharge, mélange avec la dispersion estérifiée, et agitation à température ambiante pour obtenir une solution de polymère de silane,
dans lequel, l'agitation tout en maintenant la température est effectuée à une température de 75 à 80° C ; et l'agitation tout en maintenant la température est effectuée pendant une durée de 1 à 2 heures ; et
(6) mélange de la solution de polymère de silane avec les nanoparticules hautement élastiques, le polyméthacrylate de méthyle, le tristéarate de glycéryle et l'éther de polyoxyéthylène d'alcool gras, et agitation pour obtenir le gel polymère structuré multicoeur-monocoque,
dans lequel la vitesse d'agitation est de 300 à 400 tr/min ; et l'agitation est effectuée pendant une durée de 20 à 30 minutes.

14. Utilisation d'un séparateur revêtu de gel polymère structuré multicoeur-monocoque selon l'une quelconque des revendications 1 à 8, **caractérisé en ce que** le séparateur revêtu de gel polymère structuré multicoeur-monocoque est utilisé pour la préparation d'une batterie au lithium.
